# EUROPÄISCHE PATENTSCHRIFT

(11) **EP 1 474 234 B1**
(45) Veröffentlichungstag und Bekanntmachung des Hinweises auf die Patenterteilung: **20.07.2005**
(21) Anmeldenummer: 03706112.4
(22) Anmeldetag: 14.02.2003
(51) Int. Cl.: B01J 39/04, B01J 39/16

(54) **ENANTIOSELEKTIVE KATIONENAUSTAUSCHMATERIALIEN**
ENANTIOSELECTIVE CATION-EXCHANGE MATERIALS
MATIERES ECHANGEUSES DE CATIONS ENANTIO-SELECTIVES

(30) Priorität: 15.02.2002 AT 2402002
(43) Veröffentlichungstag der Anmeldung: 10.11.2004
(73) Patentinhaber: Lindner, Wolfgang, Prof. Dr., 3400 Klosterneuburg (AT); Lämmerhofer, Michael, 1070 Wien (AT)
(72) Erfinder: Lindner, Wolfgang, Prof. Dr., 3400 Klosterneuburg (AT); Lämmerhofer, Michael, 1070 Wien (AT)
(74) Vertreter: Schwarz, Albin, Dr.
(86) Internationale Anmeldenummer: PCT/AT2003/000046
(87) Internationale Veröffentlichungsnummer: WO 2003/068397

(56) Entgegenhaltungen:
- DD-A- 20 475
- GB-A- 1 007 665
- US-A- 4 318 819
- US-A- 4 519 955
- VEIGL E ET AL: "Evaluation of silica gel-based brush type chiral cation exchangers with (S)-N-(3,5-dinitrobenzoyl)tyrosine as chiral selector: attempt to interpret the discouraging results" JOURNAL OF CHROMATOGRAPHY A, ELSEVIER SCIENCE, NL, Bd. 694, Nr. 1, 3. März 1995 (1995-03-03), Seiten 151-161, XP004023321 ISSN: 0021-9673

## Beschreibung

Die vorliegende Erfindung bezieht sich auf enantioselektive Kationenaustauschmaterialien, umfassend einen chiralen Selektor, der aus einer chiralen Komponente und zumindest einer Kationenaustauschgruppe zusammengesetzt ist, einen Spacer und einen Träger.

Im Speziellen bezieht sich die vorliegende Erfindung auf enantioselektive Molekülerkennungsmaterialien vom Kationenpaarungstyp und vom Kationenaustauschtyp, die eine neue Klasse von Trennmaterialien darstellen, welche zum spezifischen Wechselwirken mit komplementär strukturierten Molekülen an ihrer Oberfläche neue chirale Selektorkomponenten mit einer freien funktionellen Säuregruppe bzw. mit freien funktionellen Säuregruppen tragen. Überdies ist ihre Verwendung bei Molekülerkennungskonzepten zum hochselektiven Binden und Trennen, Isolieren und Reinigen von basischen chiralen Verbindungen einschließlich chiraler Synthone, Arzneistoffe, Aminosäuren, Peptide, Proteine, Aminoglycoside und anderer basischer chiraler Verbindungen Gegenstand dieser Erfindung.

### Hintergrund der Erfindung

Biologische Systeme bestehen aus inhärent chiralen Bestandteilen, z.B. Proteinen, die mit den Stereoisomeren von endogenen und exogenen chiralen Verbindungen verschieden wechselwirken können. Als Ergebnis besitzen Stereoisomere von exogenen Verbindungen wie Arzneistoffen, Toxinen, Agrochemikalien oder Lebensmittelzusätzen sehr oft unterschiedliche pharmakologische und toxikologische Profile. Diese Wirkung zwang beispielsweise Arzneistoffentwickler dazu, die pharmakologischen Profile der einzelnen Enantiomere getrennt zu studieren, und führte auch zu einer gesteigerten Anzahl von Arzneistoffen, die als ein einzelnes Enantiomer hergestellt und vermarktet werden. Eine Vorbedingung dafür ist die Verfügbarkeit von präparativen Verfahren zur Enantiomerherstellung und von analytischen Werkzeugen zum stereoselektiven Analysieren der Qualität sowie der pharmakokinetischen Wirkungen.

Einzelne Enantiomere können durch stereoselektive Synthese oder Racemat-Aufspaltung hergestellt werden. Letzterer Ansatz ist oft das bevorzugte und weitgehender verfügbare Verfahren, da Synthesen von Racematen im Vergleich zu einer stereoselektiven Synthese üblicherweise leicht und mit relativ niedrigen Kosten durchgeführt werden können und die Methodiken einer Racemat-Aufspaltung oft auf unterschiedliche, strukturell verschiedene Klassen von Verbindungen anwendbar sind. Letzterer kann auch der bevorzugte Ansatz sein, wenn beide Enantiomere in rein enantiomerer Form gebraucht werden, wie für pharmakologische Versuche. In jedem Fall erfordert letzterer Ansatz chirale Selektoren oder funktionelle Materialien, die mit Selektorgruppen modifiziert sind, welche mit den beiden Enantiomeren stereoselektiv wechselwirken können, wenn sie mit dem Racemat in Kontakt gebracht werden.

Die vorliegende Erfindung offenbart nunmehr derartige neue chirale Selektoren und neuartige funktionelle Materialien, die bei verschiedenen präparativen Racemat-Aufspaltungs- oder enantiomeren Trennkonzepten einschließlich chromatographischer Fest-Flüssig- oder Flüssig-Flüssig-Verfahren, Fest-Flüssig- oder Flüssig-Flüssig-Extraktionstechnologien und Membrantrenntechniken angewendet werden können. Gleichermaßen können die chiralen Selektoren und funktionellen Materialien auch bei analytischen Enantiomertrennverfahren angewendet werden, wo sie als Adsorptionsmaterialien in einer Säulenflüssigchromatographie, überkritischen Flüssigchromato-graphie, Kapillarelektrochromatographie, in Chiptechnologien oder als Molekülerkennungsmaterialien und sensitive Schichten in Sensortechnologien integriert sind.

Das erfindungsgemäße enantioselektive Kationenaustauschmaterial umfasst einen chiralen Selektor, der aus einer chiralen Komponente und zumindest einer Kationenaustauschgruppe zusammengesetzt ist, einen Spacer und einen Träger und ist dadurch gekennzeichnet, dass die chirale Komponente ein Molekulargewicht von weniger als 1.000 hat und eine π-π-Wechselwirkungsstelle umfasst, und die zumindest eine Kationenaustauschgruppe eine Säuregruppe mit einem pKa<4,0 ist.

Vorzugsweise ist das enantioselektive Kationenaustauschmaterial dadurch gekennzeichnet, dass die Säuregruppe einen pKa<3,5 hat. Weiters wird bevorzugt, dass die Säuregruppe einen pKa<2,5 hat.

In einer weiteren bevorzugten Ausführungsform ist das erfindungsgemäße enantioselektive Kationenaustauschmaterial dadurch gekennzeichnet, dass die Säuregruppe eine Sulfon-, Sulfin-, Phosphor-, Phosphon- oder Phosphingruppe ist.

Die vorliegende Erfindung basiert auf der überraschenden Erkenntnis, dass sich die Fähigkeiten zur chiralen Erkennung von enantioselektiven Kationenaustauschern mit ansteigendem Säuregrad des synthetischen chiralen Selektors geringer Molekülmasse verbessern.

Die primären Zielverbindungen der vorliegenden erfundenen enantioselektiven Molekülerkennungsmaterialien vom Kationenpaarungs- und Kationenaustauschtyp sind basische chirale Arzneistoffe und Zwischenverbindungen (chirale Synthone). Da ein hoher Prozentsatz des gesamten Marktanteils an chiralen Arzneistoffen basische funktionelle Gruppen enthält, was sie der Trennung durch die erfundenen funktionellen Molekülerkennungsmaterialien zugänglich macht, sollten diese einen breiten Anwendbarkeitsbereich haben.

Überdies sind viele Biomoleküle auch chiral, wobei sie basische Funktionalitäten enthalten, und somit sind die vorliegenden erfundenen funktionalisierten festen Phasen bzw. Materialien auch für Trennungen von basischen Biomolekülen, insbesondere von nahe verwandten Analoga und isomeren Formen, nützlich. Anwendungsgebiete der neuartigen Materialien schließen daher auch die Trennung von Aminosäuren, Peptiden, Proteinen, Nucleotiden, Aminoglykosiden und vielen anderen basischen chiralen Verbindungen ein.

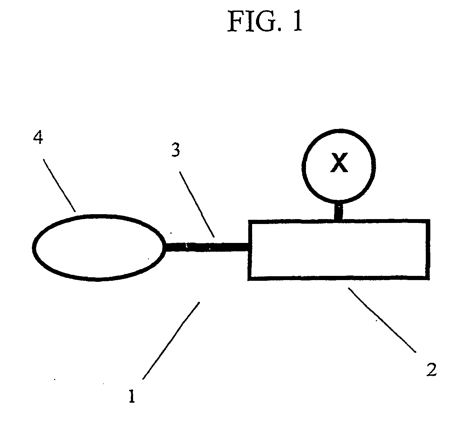

Im Folgenden sind die wichtigsten Merkmale der vorliegenden Erfindung kurz beschrieben. Die vorliegende Erfindung bezieht sich auf enantioselektive Molekülerkennungsmaterialien vom Kationenaustauschtyp und Kationenpaarungstyp, die aus zumindest 3 Modulen zusammengesetzt sind, welche i) ein saurer chiraler Selektor, der aus einer chiralen Komponente oder einem Baustein mit einer funktionellen Säuregruppe zusammengesetzt ist, ii) ein Spacer und iii) ein Träger oder Polymergerüst gemäß dem in Fig. 1 dargestellten allgemeinen Schema sind.

In jedem Fall besitzen die erfundenen funktionellen Materialien zumindest 1 freie funktionelle Säuregruppe (im Folgenden als X-Substituent bezeichnet). Der X-Substituent ist eine stark saure funktionelle Gruppe mit einem pKₐ<4,0 (bezogen auf ein vollständig wässriges System; hinsichtlich der Bedingungen der pKₐ-Bestimmung siehe Beispiel 7) wie eine Sulfon-, Sulfin-, Phosphor-, Phosphon-, Phosphin-, Boron-, Amidophosphon-, Amidosulfonsäure oder irgendeine andere Säuregruppe. Vom Standpunkt der Molekülerkennung aus betrachtet steuert diese funktionelle Säuregruppe die Wechselwirkung mit dem kationischen Ziel, dem Analyten oder den Probenbestandteilen durch starke intermolekulare ionische Wechselwirkungen gemäß Ionenpaarungs- und Ionenaustauschmechanismen, die umso stärker sind, je geringer die Dielektrizitätskonstante des Mediums ist, jedoch auch in wässrigen oder wässrig-organischen flüssigen Phasen aktiv sind.

Es wurde herausgefunden, dass mit abnehmendem pKₐ der Kationenaustauschgruppe, d.h. bei steigendem Säuregrad der funktionellen Säuregruppe des Selektors, die Selektor-Analyt-Bindungsstärke erhöht wird. Überraschenderweise verbesserte sich mit einer stärkeren Bindung auch die Fähigkeit zum enantioselektiven Binden und Trennen. Dies wurde bei weitem nicht erwartet: Obwohl von einem stärkeren Kationenaustauscher anzunehmen ist, dass er entgegengesetzt geladene Analyten stärker als ein schwaches Gegenstück bindet, konnte eine höhere Enantioselektivität nicht als logische Konsequenz erwartet werden. Im Gegensatz dazu zeigte die Erfahrung, dass Analyten, die zu stark gebunden sind, sehr oft nur eine mäßige Enantioselektivität ergeben.

Die chirale Komponente, die den sauren X-Substituenten trägt, ist eine chirale Verbindung in einer einzigen enantiomeren Form oder ist aus enantiomer reinen chiralen Synthonen konstruiert. Beide zusammen, die chirale Komponente und der X-Substituent, bilden den chiralen sauren Selektor geringer Molekülmasse, der den Kern der vorliegenden funktionellen Materialien bildet, da sie die Informationen für eine selektive Molekülerkennung der Zielverbindungen liefern. Im Gegensatz zu makromolekularen Gebilden wie Proteinen hat die chirale Komponente vorzugsweise eine geringe Molekülmasse und ist typischerweise aus chiralen Synthonen wie natürlichen oder nicht natürlichen, zyklischen oder nicht zyklischen Aminosäuren, Hydroxycarbonsäuren, Aminophosphonsäuren, Aminophosphinsäuren, Aminosulfbnsäuren, Aminosulfinsäuren, Aminoboronsäuren, Hydroxyphosphonsäuren, Mercaptophosphonsäuren, Hydroxyphosphinsäuren, Weinsäurederivaten, Mandelsäurederivaten, Camphersulfonsäurederivaten, linearen oder zyklischen, natürlichen und nicht natürlichen Peptiden, linearen oder zyklischen Sulfopeptiden, linearen oder zyklischen Phosphonopeptiden synthetisiert. Der chirale saure Selektor geringer Molekülmasse kann auch eine amphotere Verbindung sein, die negativ geladen ist, wenn sie bei Bedingungen unter dem isoelektrischen Punkt verwendet wird. Neben der vom X-Substituenten geschaffenen primären ionischen Wechselwirkungsstelle haben optimal funktionierende Varianten von Molekülerkennungsmaterialien vom Kationenaustausch- und Kationenpaarungstyp zusätzlich andere Wechselwirkungsstellen wie Wasserstoff-Donor-Akzeptor-Gruppen (mit Y bezeichnet) und/oder π-π-Wechselwirkunsgstellen (aromatische Gruppen mit vorzugsweise elektronenabziehenden oder elektronenabgebenden Substituenten) sowie sperrige Elemente für abstoßende und/oder anziehende Wechselwirkungen vom van der Waals-Typ. Der funktionelle Y-Substituent kann eine Amid-, Carbamat-, Sulfonamid-, Harnstoff-, Carbonyl-, Semicarbazid-, Hydrazid- oder Sulfonimidgruppe oder ein anderes ähnliches Wasserstoff-Donor-Akzeptor-System sein. Sperrige Elemente der Selektorkomponente und wechselwirkende funktionelle Gruppen sind derart zusammengesetzt, dass eine Bindungstasche vorgeformt wird, wobei die polaren Wechselwirkungsstellen mehr im Zentrum der Tasche und die hydrophoben sperrigen Gruppen am Rand der Tasche angeordnet sind. In diese Tasche können Zielanalyten, die den Bindevoraussetzungen sterisch und elektrostatisch entsprechen, gezielt binden, während andere von einer starken Bindung ausgeschlossen sind.

Für viele Anwendungen müssen diese Selektoren auf festen oder gelegentlich auch auf flüssigen Matrizen, die Träger genannt werden, derart immobilisiert werden, dass die Selektorgruppen richtig der umgebenden Lösung ausgesetzt werden, welche die gezielt zu erkennenden und zu bindenden Zielverbindungen enthält, wobei deren Bindung ermöglicht wird. Der Träger sollte hinsichtlich der Bindung der Zielverbindung inaktiv (inert) sein, hat jedoch die Funktion, die chemische und physikalische Stabilität des Molekülerkennungsmaterials zu garantieren. Bei Durchflussanwendungen wie der Chromatographie bestimmt der Träger bzw. bestimmen seine physikalischen Eigenschaften die kinetischen Eigenschaften der Materialien. Er ist daher ein wichtiger Bestandteil des funktionellen Materials. Bei der vorliegenden Erfindung kann der Träger ein anorganisches, organisches oder gemischt anorganisch-organisches hybridartiges Material sein. Derartige Trägermaterialien umfassen kommerziell erhältliche und selbstentwickelte Perlen, monolithische oder kontinuierliche Materialien, Nanopartikel, Membranen, Harze, oberflächenbegrenzte Schichten, die hergestellt sind aus chemischen Materialien umfassend Siliciumdioxid (SiO₂), Aluminiumoxid (Al₂O₃), Zirconiumdioxid (ZrO₂), Titanoxid (TiO₂), von Sol-Gel abgeleitete Materialien, organisch-anorganische kieselerdehaltige Hybridmaterialien, gegebenenfalls vemetzte Polysiloxane, jedes aus Vinylmonomeren erhaltene Polymer, gegebenenfalls vernetzte Poly(meth)acrylate, gegebenenfalls vernetzte Poly(meth)acrylamide, gegebenenfalls vemetzte Polystyrole, gemischte Styrol-(Meth)acrylatpolymere, Ringöffnungsmethathesepolymere, Polysaccharide, Agarose und jedes dieser Materialien, das spezifisch funktionalisiert wurde, um eine Immobilisierung des chiralen sauren Selektors geringer Molekülmasse zu erlauben. Unter den bevorzugten Trägern sind Siliciumdioxidperlen, Poly(meth)acrylatpolymerperlen, Poly(meth)acrylamidperlen, Poly(meth)acrylat-Monolithen, Polystyrolharze, die gegebenenfalls mit anhängenden reaktionsfähigen Gruppen zur Immobilisierung des Selektors modifiziert werden.

Als Träger kann auch ein Polymergerüst oder eine Polymermatrix angesehen werden, so dass ein Spacer und chiraler saurer Selektor tatsächlich anhängende chirale Gruppen des Polymers, die für eine gezielte Molekülerkennung der basischen Zielverbindungen verantwortlich sind, darstellen.

Der Spacer besitzt hauptsächlich die Funktion, den sauren Selektor geringer Molekülmasse an den Träger zu binden. Sowohl die Länge als auch die chemische Funktionalität des Spacers sind variabel. Er kann bis zu einem gewissen Grad an der Selektor-Analyt-Bindung mit positiver, aber auch negativer Wirkung auf die Selektivität teilhaben. Er kann die Starrheit und Zugänglichkeit des Selektors beeinflussen und dabei auch eine Wirkung auf die Bindungscharakteristika ausüben. Letztendlich bestimmt er die chemische Stabilität der funktionellen Materialien und kann deren Kompatibilität mit Analyten beeinflussen, ein Faktor, der insbesondere für die Biomolekültrennung wichtig ist. Alle allgemeinen Festphasen-Linkerkonzepte und -ansätze zur Herstellung von chromatographischen stationären Phasen können für die Synthese der vorliegenden funktionellen Materialien angewendet werden. Immobilisierungsstrategien, die für die Synthese von derzeit erfundenen chiralen Kationenaustauschermaterialien bevorzugt werden, umfassen die Umsetzung eines vinylmodifizierten sauren Selektors mit einem thiolmodifizierten Träger, insbesondere mit thiolpropylmodifiziertem Siliciumdioxid, durch eine Radikal-Additionsreaktion. Andere Immobilisierungskonzepte, die angewendet werden können, umfassen die asymmetrische Umsetzung eines Diisocyanat-Linkers mit einem amino- oder hydroxyalkylmodifizierten Träger und einer amino- oder hydroxymodifizierten Selektorkomponente, die Umsetzung eines amino-, hydroxy- oder thiolmodifizierten Trägers mit einem chlor- oder bromalkanoylderivatisierten Selektor, die Umsetzung von Alkoxy- oder Chlororganosilan mit einer terminalen, reaktionsfähigen Funktionalität zum Ankoppeln an eine Selektorkomponente, die Hydrosilylierungsreaktion von Alkoxy- oder Chlorhydrosilan mit einem eine Vinylgruppe enthaltenden Selektor, die Kopplung eines aminomodifizierten Trägers und eines aminomodifizierten Selektors durch Umsetzung von einem der 2 Bestandteile mit einem Dicarbonsäureanhydrid-Spacerbestandteil und die nachfolgende Aktivierung der resultierenden Carbonsäurefunktion und Umsetzung mit einem zweiten Aminobestandteil und viele andere Immobilisierungsstrategien, die im Allgemeinen zur Immobilisierung von chiralen Selektoren, Proteinen und Peptiden an festen Trägern angewendet werden.

In besonderen Fällen kann die derzeitige enantioselektive Trennungsart vom Kationenaustauschtyp mit anderen Trennungsarten wie der Umkehrphasenchromatographie kombiniert werden, u.zw. z.B. durch Verwendung von neuartigen Oberflächenmodifikationen, die durch die Kombination von obenstehend beschriebenen Selektorkomponenten mit langkettigen Alkylgruppen erhalten werden, was zu RP-chiralen Mischform-Selektoren vom Kationenaustauschtyp und festen Phasen mit dedizierter Selektivität und Trenncharakter führt.

Einer der besonderen Vorteile besteht darin, dass die obenstehend beschriebenen funktionellen Materialien gegenüber mehr oder weniger allen normalerweise eingesetzten Flüssigphasensystemen resistent sind. Somit können diese funktionellen Materialien mit Erscheinungsformen der wässrigen, wässrig-organischen (Umkehrphase), polaren organischen Phase und apolaren organischen Phase (Normalphase) betrieben werden, wobei die flüssige oder mobile Phase für den Betrieb im Ionenaustauschmodus in jedem Fall ein Kation, vorzugsweise ein Ammonium oder eine organische Ammoniumverbindung, als Gegenion enthalten muss.

Die vorliegende Erfindung bezieht sich auch auf die Anwendung aller Verfahren, welche bei präparativen chromatographischen Fest-Flüssig- oder Flüssig-Flüssig-Verfahren, Fest-Flüssig- oder Flüssig-Flüssig-Extraktionstechnologien und Membrantrenntechniken die neuartigen erfindungsgemäßen Molekülerkennungsmaterialien vom Kationenaustauschtyp und Kationenpaarungstyp einsetzen. In Analogie dazu ist deren Anwendung bei analytischen Methodiken, u.zw. als Adsorptionsmaterialien in einer Säulenflüssigchromatographie, überkritischen Flüssigchromatographie, Kapillarelektrochromatographie, in Chiptechnologien oder als Molekülerkennungsmaterialien und sensitive Schichten in Sensortechnologien integriert, ebenso Gegenstand der vorliegenden Patentanmeldung.

### Stand der Technik

Eine Vielfalt von chiral funktionalisierten Adsorptionsmaterialien wurde zuvor für das Ziel einer Enantiomertrennung entwickelt. Eine detaillierte Übersicht über enantioselektive stationäre Phasen und die entsprechenden Verfahren, welche derartige Materialien für eine HPLC-Enantiomertrennung einsetzen, ist anderswo gegeben [M. Lämmerhofer und W. Lindner, Recent developments of liquid chromatographic enantioseparation. In: Handbook of analytical separations. (Reihe Hgb.: R.M. Smith). Band 1: Separation methods in drug synthesis and purification (Hgb.: K. Valko) Elsevier, Amsterdam, 2000, S. 337-437]. Einige der funktionalisierten chiralen Materialien, die durch den einen oder anderen Aspekt mit der vorliegenden Erfindung zusammenhängen, sind im folgenden Abschnitt beschrieben.

### Chirale Ionenaustauscher geringer Molekülmasse:

Die Erfinder der vorliegenden Erfindung offenbarten zuvor die Entdeckung von chiralen Trennmaterialien vom Anionenaustauschtyp, welche auf festen Trägern immobilisierte, synthetische basische chirale Selektoren geringer Molekülmasse haben und zur Trennung von Stereoisomeren von Säureverbindungen eingesetzt wurden (Cinchonan Based Chiral Selectors for Separation of Stereoisomers. Lindner, W., Lämmerhofer, M., Maier, N.M., *PCT Int. Appl. (1997)* WO 9746557, EP 912563, US 6313247). Detaillierte Beschreibungen dieser Arbeit wurden später in verschiedenen Abhandlungen veröffentlicht [M. Lämmerhofer et al., *J Chromatogr. A,* 741 (1996) 33; A. Mandl et al., *J Chromatogr. A,* 858 (1999) 1; N.M. Maier et al., *Chirality*, 11 (1999) 522], siehe auch Kapitel 9.2.3.2. von [M. Lämmerhofer und W. Lindner, Recent developments of liquid chromatographic enantioseparation. In: Handbook of analytical separations. (Reihe Hgb.: R.M. Smith). Band 1: Separation methods in drug synthesis and purification (Hgb.: K. Valko) Elsevier, Amsterdam, 2000, S. 337-437] und darin enthaltene Referenzen. Dieselben Selektoren und chiralen stationären Phasen wurden auch bei der Kapillarelektrochromatographie (CEC) eingesetzt [M. Lämmerhofer und W. Lindner, *J. Chromatogr. A,* 829 (1998) 115-125] oder wurden speziell für ihre Verwendung in der CEC angepasst [M. Lämmerhofer et al., *Anal. Chem*., 72 (2000) 4614-4628; J.M.J. Frechet, F. Svec, M. Lämmerhofer, Electrochromatographic device for use in enantioselective separation and enantioselective separation medium for use therein. *US Patent Application* Ser.Nr. 09/645,079 (2000).]. Damit verwandte, auf Ergot-Alkaloidselektoren basierende, chirale stationäre Phasen wurden von M. Flieger und M. Sinibaldi und Mitarbeitern entwickelt, siehe Referenzen 392-395 von [M. Lämmerhofer und W. Lindner, Recent developments of liquid chromatographic enantioseparation. In: Handbook of analytical separations. (Reihe Hgb.: R.M. Smith). Band 1: Separation methods in drug synthesis and purification (Hgb.: K. Valko) Elsevier, Amsterdam, 2000, S. 337-437]. All diese alkaloidabgeleiteten chiralen Materialien hängen durch die Existenz von enantioselektiven chiralen Ionenaustauschmechanismen, die ionische Wechselwirkungen zwischen entgegengesetzt geladenen chiralen Selektoren und Analyten beinhalten, mit der vorliegenden Erfindung begrifflich zusammen. Dies stellt jedoch einen Ansatz dar, der reziprok ist zu dem, was in der vorliegenden Patentanmeldung beansprucht ist, was bedeutet, dass ein einzelnes Enantiomer einer kationischen chiralen Verbindung als chiraler Selektor eingesetzt wird und auf festen Trägern immobilisiert oder in polymere Gerüstmaterialien eingebaut wird, was zu chiralen Anionenaustauschern führt. Das Anwendbarkeitsspektrum von solchen enantioselektiven Anionenaustauschern ist natürlich mehr oder weniger auf die Trennung von chiralen Säuren beschränkt. Theoretisch könnten durch Anwendung des Reziprozitätsprinzips der chiralen Erkennung [W. Pirkle et al., J. Chromatogr., 192 (1980) 143-158; W. Pirkle und R. Däppen, J. Chromatogr., 404(1987) 107-115], wobei ein einzelnes Enantiomer des sauren Bindungspartners der obenstehend beschriebenen chiralen Anionenaustauschkonzepte immobilisiert wird, enantioselektive stationäre Phasen entwickelt werden, welche die Trennung der Enantiomere von chiralen Basen erlauben würden. In der Praxis kann dieses Prinzip, wie untenstehend beschrieben, jedoch leicht versagen und ist seine experimentelle Verwirklichung nicht trivial. An diesem Punkt ist zu betonen, dass das Reziprozitätsprinzip der chiralen Erkennung ursprünglich für stationäre Phasen vom Pirkle-Konzept (*vide supra*) entdeckt wurde, welches auch neutrale Selektoren und Analyten einsetzt, und daher war unklar, ob es auch auf das chirale Ionenaustauschkonzept mit geladenen Selektoren und Analytspezies zutrifft.

Vom Erfolg des Ansatzes für den chiralen Anionenaustausch ermutigt, versuchten die Erfinder in der Tat dennoch bereits früher, dieses Konzept reziprok auf basische Analyten auszudehnen, was zu chiralen Kationenaustauschern geringer Molekülmasse führte, leider mit sehr negativen Ergebnissen [E. Veigl et al., J. Chromatogr. A, 694 (1995) 151]. Im Gegensatz zu den erfolgreichen Beispielen, über die beim Pirkle-Konzept berichtet wurde, funktionierte sehr zur Überraschung das Reziprozitätsprinzip der chiralen Erkennung im Fall von enantioselektiven Ionenaustauschern nicht. Über ähnliche Probleme bei der Verwirklichung des Reziprozitätsprinzips wurde bereits zuvor in mehreren Publikationen, die ebenfalls von chiralen stationären Phasen vom Pirkle-Konzept handelten, berichtet [M.H. Hyun et al., J. Chromatogr. A, 922 (2001) 119-125].

Die Arbeit von Veigl et al. war der einzige Versuch von enantioselektiven Kationenaustauschern, über den bis jetzt berichtet wurde, die entwickelten Materialien waren allerdings völlig nutzlos. Diese völlig negativen Ergebnisse wurden in einer im J. Chromatogr. veröffentlichten Abhandlung beschrieben und interpretiert [E. Veigl at al., J. Chromatogr. A, 694 (1995) 151] und führten unter den auf dem Gebiet der chiralen Trennung arbeitenden Wissenschaftlern zu dem technischen Vorurteil, dass derartige enantioselektive Kationenaustauscher aus keinem Grund erfolgreich funktionieren können. Dies wird auch von der langen Zeit wiedergespiegelt, die verging, bis die Erfinder dieses technische Vorurteil nunmehr überraschend überwinden konnten. Der Schlüssel zum Erfolg der vorliegenden Erfindung war die Entdeckung, dass sich die Fähigkeiten zur chiralen Erkennung von enantioselektiven Kationenaustauschern mit ansteigendem Säuregrad des synthetischen chiralen Selektors geringer Molekülmasse verbessern. Dieser Erfindungsschritt wurde in der Vergangenheit nicht übertroffen, und das günstige, stark saure funktionelle Strukturelement wurde nie mit anderen geeigneten Strukturelementen kombiniert (geringe Distanz zwischen stereogenem Zentrum und primärer ionischer Wechselwirkungsstelle, die zum stereogenen Zentrum entweder in α-, β- oder γ-Position sind, sterische Barrieren, aromatische Gruppen für eine π-π-Wechselwirkung), die für erfolgreiche chirale Selektoren notwendig sind. Die neuartigen enantioselektiven Kationenaustauscher, die alle erwähnten günstigen strukturellen Merkmale vereinen, zeigten hinsichtlich der enantioselektiven Molekülerkennung und Enantiomertrennung von chiralen Basen verschiedener Arten äußerst vielversprechende Ergebnisse. Vorzugsweise sind die starken enantioselektiven Kationenaustauscher, die auf Sulfon- oder Phosphonsäuregruppen tragenden Selektoren basieren, durch ihre großen Enantioerkennungsfähigkeiten klar von den nicht erfolgreichen Präzedenzfällen der obenstehenden Abhandlung zu unterscheiden (siehe Beispiele).

### Chirale Ionenpaarchromatographie:

In generischer Hinsicht kann die chirale Ionenpaarchromatographie als irgendwie mit den Verfahren der enantioselektiven Ionenaustauschchromatographie zusammenhängend betrachtet werden [besprochen von C. Pettersson und E. Heldin in: A practical approach to chiral separations by liquid chromatography. G. Subramanian (Hgb.), VCH, Weinheim, 1994, S. 279-310]. Beispielsweise wurden für die Trennung von chiralen Basen saure chirale Gegenionen wie 2,3,4,6-Di-O-isopropyliden-2-keto-L-gulonsäure, Z-derivatisierte Aminosäuren, Di- oder Tripeptide, 10-Camphersulfonsäure, Weinsäure und Weinsäurederivate als Zusätze zur mobilen Phase eingesetzt [siehe C. Pettersson und E. Heldin in: A practical approach to chiral separations by liquid chromatography. G. Subramanian (Hgb.), VCH, Weinheim, 1994, S. 279-310, und darin enthaltene Referenzen]. Diese chiralen Gegenionen bilden stereoselektiv elektrisch neutrale Ionenpaare mit chiralen Basen in der mobilen Phase, die auf achiralen stationären Phasen wie stationären Phasen vom Umkehrphasentyp verschiedene Adsorptionseigenschaften besitzen. Als Sekundärgleichgewicht kann auch das chirale Gegenion auf die stationäre Phase adsorbiert werden und bildet somit einen dynamisch beschichteten chiralen Ionenaustauscher. Der Nachteil eines solchen Ansatzes besteht im Vorhandensein des Selektors im abfließenden Medium, was bei den meisten Nachweismethoden Störungen und Probleme verursacht und deren Verwendung bei präparativen Konzepten verhindert. Das kovalente Haften des Selektors auf der stationären Phase in den erfindungsgemäßen Materialien und die resultierende Eliminierung des Selektors aus dem abfließenden Medium stellt im Vergleich zum Modus der Ionenpaarchromatographie in der Tat einen beträchtlichen Vorteil dar.

### Chirale Ligandenaustausch-Trennmaterialien:

Es könnte angenommen werden, dass stationäre Phasen vom chiralen Ligandenaustauschtyp [besprochen von V.A. Davankov, J. Chromatogr. A, 666 (1994) 55; und von A. Kurganov, J. Chromatogr. A, 906 (2001) 51-71; und von M. Lämmerhofer und W. Lindner, Recent developments of liquid chromatographic enantioseparation. In: Handbook of analytical separations. (Reihe Hgb.: R.M. Smith). Band 1: Separation methods in drug synthesis and purification (Hgb.: K. Valko) Elsevier, Amsterdam, 2000, S. 337-437], die als Trennprinzip eine stereoselektive Chelatbildung einsetzen, auch irgendwie mit dem obenstehend beschriebenen chiralen Ionenaustauscher geringer Molekülmasse zusammenhängen. Am öftesten werden Aminosäuren, insbesondere Prolinderivate, dynamisch oder kovalent als Chelatbildner bzw. chirale Selektoren auf geeigneten Trägern immobilisiert, die selektiv gemischte Metallkomplexe mit Analyten bilden, welche auch für die in der flüssigen (mobilen) Phase gelösten Metallionen Chelatbildungseigenschaften haben müssen. Es gibt im Allgemeinen zumindest 2 deutliche Unterschiede beim Vergleich mit den Materialien der vorliegenden Erfindung: i) Anstelle eines Selektors vom Ionenaustauschtyp wird auf dem Träger ein Chelator immobilisiert. Solche Chelatoren sind oft Aminosäuren wie Prolin, Hydroxyprolin oder Penicillinderivate, wie obenstehend erwähnt [hinsichtlich der Strukturen, siehe obenstehende Rezensionsartikel und darin enthaltene Referenzen]. Funktionelle Materialien vom chiralen Ligandenaustausch(CLEC)typ besitzen üblicherweise sowohl saure als auch basische funktionelle Gruppen. ii) Vollkommen unterschiedliche Molekülerkennungs- und SO-SA-Bindungsmechanismen sind involviert. Im Gegensatz zu erfindungsgemäßen Trennmaterialien vom Kationenaustauschtyp werden keine Ion-Ion-Wechselwirkungen zwischen sauren Selektorkomponenten und kationischen Gruppen des Analyts gebildet. Beispielsweise können Enantiomere von Aminoalkoholen mit Phasen vom CLEC-Typ aufgespalten werden, wobei die funktionelle Säuregruppe der Phase vom CLEC-Typ mit dem positiv geladenen Metallion, der im gemischten Selektor-Metall-Analytkomplex auch als Elektronenakzeptor für die basische Funktion des Analyts fungiert, wechselwirkt.

### Chirale Kronenetherphasen

Kürzlich entwickelten Machida et al. eine neue chirale stationäre Kronenetherphase [Y. Machida et al., J. Chromatogr. A, 805 (1998) 85-92; M.H. Hyun et al., J. Chromatogr. A, 822 (1998) 155-161] für die Trennung der Enantiomere von chiralen primären Aminen. Die Kronenetherkomponente dieser CSP umfasst Carbonsäuregruppen. Die primären Amine werden jedoch durch Einschluss in die Cavität der makrozyklischen Krone komplexiert und innen gehalten, und zwar insbesondere wegen der gleichzeitigen dreifachen Wasserstoffbindung zwischen dem NH des Ammoniumions und den Ethersauerstoffen, wie durch NMR-Versuche gezeigt wurde [Y. Machida et al., J. Chromatogr. A, 810 (1998) 33-41:S.39]. Steffeck, Zelechonok und Gahm im J. Chromatogr. A 947 (2002) 301-305, beschreiben eine enantioselektive Trennung von racemischen sekundären Aminen auf dieser chiralen stationären Flüssigchromatographiephase auf Kronenetherbasis.

### Chirale stationäre Phasen, basierend auf makromolekularen und mittelgroßen natürlichen Selektoren:

Stationäre Phasen vom Proteintyp, z.B, basierend auf Rinder-Serumalbumin (BSA) [S. Allenmark et al., J. Chromatogr., 264 (1983) 63], menschlichem Serumalbumin (HSA) [E. Domenici et al., Chromatographia, 29 (1990) 170], α₁-saurem Glycoprotein (AGP) [J. Hermansson, J. Chromatogr. 269 (1983) 71], oder Ovomucoid (OVM) [T. Miwa et al., J. Chromatogr., 408 (1987) 316], können auf einem makromolekularen Selektorlevel als Gegenstücke zu den derzeit erfundenen niedermolekularen Selektoren vom Ionenaustauschtyp angesehen werden [hinsichtlich einer detaillierteren Liste von für die Enantiomertrennung verwendeten Proteinen siehe Besprechungen von J. Haginaka, J. Chromatogr. A, 906 (2001) 253-273; und von M. Lämmerhofer und W. Lindner, Recent developments of liquid chromatographic enantioseparation. In: Handbook of analytical separations. (Reihe Hgb.: R.M. Smith). Band 1: Separation methods in drug synthesis and purification (Hgb.: K. Valko) Elsevier, Amsterdam, 2000, S. 337-437; Kapitel 9.2.1.2. S. 365-373]. Ionisierte funktionelle Gruppen der Seitenketten des Proteins können einer Ion-Ion-Wechselwirkung mit komplementär geladenen funktionellen Gruppen der Analyten unterzogen werden. Wie hervorgehoben, unterscheiden sie sich von den Materialien der vorliegenden Erfindung durch die molekulare Größe des Selektors und das daraus resultierende ungünstige Verhältnis von selektiven Bindungsstellen mit hoher Affinität pro Mol Protein und chiraler stationärer Phase, was zu einer schlechten Beladungskapazität von letzterer führt. Zusätzlich sind Proteinselektoren vollkommen natürliche Selektoren von einer biologischen Quelle, gebildet rein aus natürlichen proteinogenen Aminosäuren, und es können diese unterscheidenden Bindungsstellen nicht chemisch zugeschnitten werden, um auf die sterischen und funktionellen Vorbedingungen von Analyten besser abzustimmen. Dedizierte Derivatisierungs- und Optimierungsstrategien sind unmöglich. Weiters haben sie eine eingeschränkte chemische und biologische Stabilität, Nachteile, die bei den erfindungsgemäßen Materialien nicht existieren oder durch die Verwendung von nicht natürlichen Aminosäuren als Bausteinen überwunden werden.

Ein weiterer, aber unterschiedlicher makromolekularer natürlicher chiraler Selektor, der zur Herstellung von chiralen Trennmaterialen verwendet wurde, ist Heparin, ein Glucosaminoglykan, das eine heterogene Mischung aus variabel sulfatierten Polysaccharidketten, die aus sich wiederholenden Einheiten von D-Glucosamin und entweder L-Iduron- oder D-Glucuronsäure bestehen, ist. Chloroquin-Enantiomere wurden durch die Verwendung einer chiralen stationären Phase, basierend auf Heparin, mittels Hochleistungsflüssigchromatographie getrennt [A. Stalcup et al., Anal. Chem., 68 (1996) 13]. Die auf Heparin basierende CSP ist nicht sehr gut charakterisiert, da sie aus variierenden Wiederholungseinheiten zufällig zusammengesetzt ist (*vide infra*), und es fehlen ihr auch wichtige strukturelle Elemente der derzeit erfundenen Selektoren wie sterische Barrieren und π-π-Wechselwirkungsstellen.

Eine weitere Gruppe von Selektoren einer natürlichen Quelle sind die makrozyklischen Antibiotika einschließlich Vancomycin, Teicoplanin, Ristocetin und Avoparcin [besprochen von M. Lämmerhofer und W. Lindner, Recent developments of liquid chromatographic enantioseparation. In: Handbook of analytical separations. (Reihe Hgb.: R.M. Smith). Band 1: Separation methods in drug synthesis and purification (Hgb.: K. Valko) Elsevier, Amsterdam, 2000, S. 337-437; Kapitel 9.2.2.2., S. 381-392; und von T.J. Ward und A.B. Farris III, J. Chromatogr. A, 906 (2001) 73-89]. Auch aus diesen mittelgroßen makrozyklischen Selektoren, die auch Fähigkeiten zur ionischen Wechselwirkung haben, wurden chirale stationäre Phasen entwickelt, z.B. aus Vancomycin [D.W. Armstrong et al., Anal. Chem., 66 (1994) 1473], Teicoplanin [D.W. Armstrong et al., Chirality, 7 (1995) 474] und Ristocetin [K.H. Ekborg-Ott et al., Chirality, 10 (1998) 434]. Es wurde gezeigt, dass als primäre Funktionsmechanismen Einschlusskomplexbildungen in den durch die makrozyklische Struktur gebildeten Korb in Kombination mit einer multiplen Wasserstoffbindung am Peptidgerüst des Peptidomimetischen dominierend sind, während Wechselwirkungen vom Ionenaustauschtyp, falls solche bestehen, von sekundärer Bedeutung sind. Im Gegensatz zu den erfindungsgemäßen synthetischen Selektoren geringer Molekülmasse vom Ionenaustauschtyp werden diese natürlichen Selektoren wegen ihrer komplizierten Struktur nicht synthetisch aufgebaut und sind somit nicht in beiden enantiomeren Formen verfügbar.

### Makromolekulare synthetische chirale Ionenaustauscher, erhalten durch einen molekularen Imprinting-Prozess:

Zu dieser Ionenaustauscherklasse sind einige chirale Trennmedien zu zählen, die vollkommen synthetisch sind und durch eine Matrizenpolymerisation von ionisierbaren funktionellen Monomeren und komplementär ionisierbaren Matrizenmolekülen, sogenannten molekular abgedruckten Polymeren (MIP), erhalten werden. Wenn das Matrizenmolekül ein einzelnes Enantiomer einer chiralen Verbindung ist, können chirale Höhlungen gebildet werden, welche die Matrize gezielt wieder binden können. Zuvor wurden von Sellergren und Shea die Existenz und das Vorherrschen eines Kationenaustausch-Retentionsmechanismus für ein saures MIP erstellt, das aus Methacrylsäure als funktionellem Monomer und basischem Phenylalaninanilid als Matrize hergestellt wurde [B. Sellergren und K.J. Shea, J. Chromatogr. A, 654 (1993) 17]. Der signifikanteste Unterschied dieser Materialien im Vergleich zu jenen der vorliegenden Erfindung besteht in der (Mikro)heterogenität der Bindungsstellen. Wie hervorgehoben, werden die enantioselektiven Bindungsstellen von MIP-Typ-Kationenaustauschern im Gegensatz zu erfindungsgemäßen enantioselektiven Kationenaustauschermaterialien, wo die Bindungsstelle vollständig spezifiziert und charakterisiert ist, aus nicht chiralen funktionellen Monomeren zusammengesetzt, was zu schlecht definierten und heterogenen Bindungsstellen führt. Dies beeinflusst die Leistungsfähigkeit des Trennmaterials nachteilig, ein den MIPs innewohnendes Problem. Mehr Details sind in einem kürzlich erschienenen Rezensionsartikel zu finden [B. Sellergren, J. Chromatogr. A, 906 (2001) 227-252].

### Chirale Trennmaterialien vom Nichtionenaustauschtyp mit einiger Verwandtschaft zur vorliegenden Erfindung:

Eine große Anzahl an chiralen stationären Phasen, die auf synthetischen Selektoren geringer Molekülmasse basieren, verwenden dieselben oder ähnliche chirale Bausteine (chirale Synthone) wie in dieser Anmeldung geoffenbart. Der signifikante Unterschied besteht jedoch darin, dass die Säurefunktion verestert oder amidiert wird, was zu Trennmaterialien mit neutralen chiralen Selektoren führt. Solche CSPs werden zur Trennung von Enantiomeren von neutralen chiralen Verbindungen oder von basischen und sauren chiralen Verbindungen unter Bedingungen, bei denen die Ionisierung unterdrückt wird, verwendet. Dieses Konzept ist als das Pirkle-Konzept bekannt; detaillierte Listen von Selektoren und chiralen stationären Phasen, die entwickelt wurden und als Pirkle-Konzept-Phasen kategorisiert werden können, sind in Besprechungen von [M. Lämmerhofer und W. Lindner, Recent developments of liquid chromatographic enantioseparation. In: Handbook of analytical separations. (Reihe Hgb.: R.M. Smith). Band 1: Separation methods in drug synthesis and purification (Hgb.: K. Valko) Elsevier, Amsterdam, 2000, S. 337-437, Kapitel 9.2.3.1.; S. 395-405; von F. Gasparrini et al., J. Chromatogr. A, 906 (2001) 35-40; und von C. Welch, J. Chromatogr. A, 666 (1994) 3] zu finden. Einige der herausragendsten Vertreter sind Phasen, die auf N-(3,5-Dinitrobenzoyl)phenylglycin (DNBPG) oder N-(3,5-Dinitrobenzoyl)leucin (DNBLeu) [W.H. Pirkle et al., J. Chromatogr., 348 (1985) 89; und W.H. Pirkle und J.E. McCune, J. Chromatogr., 479 (1989) 419], N-DNB-3-Amino-3-phenyl-2-*tert*.-butyl-propansäure (β-Gem 1) [W.H. Pirkle und J.E. McCune, J. Chromatogr., 441 (1988) 311], N-(2-Naphthyl)alanin (NAP-A1) [W.H. Pirkle et al., J. Org. Chem., 51 (1986) 4991], N-(3,5-Dinitrobenzoyl)tyrosin (DNB Tyr-E und ChyRoSine) [N. Bargmann-Leyder et al., Chromatographia, 39 (1994) 673 und N. Bargmann-Leyder et al., Anal. Chem., 67 (1995) 952], N-{[1-(1-Naphthyl)ethyl]amido}-tert.-leucin (Sumichiral OA-4600) [N. Oi et al., J. Chromatogr. A, 694 (1995) 129], N-DNB-α-Amino-2,2-dimethyl-4-pentylphosphonsäure (α-Burke 1) [W.H. Pirkle und J.A. Burke, J. Chromatogr., 557 (1991), 173] und L-Val-L-Val-L-Val-Tripeptid [N. Oi et al., J. Chromatogr. A, 722 (1996) 229] basieren. Über andere auf Peptid basierende CSPs wurde berichtet, z.B. über CSP aus Val-Tripeptid und 1-(1-Naphthyl)amin als um Triazin angesammelte chirale Synthone [A. Iuliano et al., J. Chromatogr. A, 786 (1997) 355], oder über CSPs für N-(2-Naphthyl)alanindiethylamid, das auf Dipeptidselektoren basiert, die N-terminal mit DNB derivatisiert und durch einen kombinatorischen Ansatz entwickelt wurden [C.J. Welch et al., Enantiomer, 3 (1998) 471]. Wiederum muss betont werden, dass bei all diesen Ansätzen keinerlei Ionenaustauschmechanismen vorherrschten, was sie klar von der vorliegenden Erfindung unterscheidet.

### Andere nicht verwandte Ansätze und Materialien:

Herkömmliche Trennmaterialien vom Kationenaustauschtyp haben achirale funktionelle Säurekomponenten auf Trägern immobilisiert und stehen daher mit den funktionellen Materialien der vorliegenden Erfindung in keinem Zusammenhang. Sie können zur Trennung von chiralen Basen eingesetzt werden, sind jedoch nicht enantioselektiv, d.h. sie können die Enantiomere von chiralen Basen nicht trennen. Gleichermaßen wurde das aus optisch inaktivem Poly(succinimid) hergestellte, peptidartige Poly(asparaginsäure)-siliciumdioxid-Sorptionsmittel (PolyCAT A) [C.N. Ou et al., J. Chromatogr., 266 (1983) 197] für die nicht enantioselektive Kationenaustauschchromatographie von Proteinen entwickelt. Dieses Poly(asparaginsäure)material wurde auch derart mit achiralem Taurin modifiziert, dass eine Sulfoethylaspartamid-modifizierte stationäre Phase (Polysulfoethyl A) erhalten wurde. Es wurde auch zur nicht enantioselektiven Kationenaustauschchromatographie eingesetzt. Die funktionellen Gruppen dieser Sorptionsmittel stellen unbestimmte, zufällig polymerisierte, optisch inaktive Ligandenmoleküle dar und unterscheiden sich daher klar von den erfindungsgemäßen chiralen Säureselektoren geringer Molekülmasse, wobei eine gut charakterisierte Struktur und zusätzliche strukturelle Merkmale (z.B. π-π-Wechselwirkungsstelle) erforderlich sind, um enantioselektiv zu sein. Tatsächlich sind die obenstehend erwähnten PolyCAT A- und Polysulfoethyl A-Phasen für chirale Basen nicht enantioselektiv.

Andere mit Peptiden modifizierte stationäre Phasen werden bei nicht enantioselektiven Affinitätschromatographiekonzepten eingesetzt. Beispiele für solche Materialien umfassen Monolithen, die mit synthetischen Peptiden modifiziert und zur Immunoaffinitätschromatographie eingesetzt werden [G.A. Platonova, et al., *J. Chromatogr*. A, 1999, 852, 129-140], und zwar mit einer Ser-Pro-Gly-Phe-Arg-Sequenz, die direkt auf Monolithscheiben und gekörnten Materialien synthetisiert ist, welche dann - nach der Abspaltung der N-terminalen Schutzgruppe - direkt für die Immunoaffinitätschromatographie verwendet wurden [V.L. Korol'kov et al., *Lett. Pept. Sci*., 2000, 7, 53-61], sowie *in situ*-hergestellte Monolithen mit Peptidligand für die Immunoaffinitätschromatographie [R. Hahn et al., Anal. Chem., 73 (2001) 5125-5132].

### Beschreibung der bevorzugten Ausführungsformen

Die vorliegende Erfindung stellt enantioselektive Molekülerkennungsmaterialien vom Kationenaustauschtyp und enantioselektive Molekülerkennungsmaterialien vom Kationenpaarungstyp bereit, die anorganische, organische oder auf einem anorganisch/organischen Hybrid basierende, chirale chemische Verbindungen oder Materialien sind, die aus chiralen Synthonen geringer Molekülmasse und zumindest einer freien funktionellen Säuregruppe mit pKₐ<4,0 (bezogen auf rein wässrige Bedingungen) als synthetische chirale saure Selektoren geringer Molekülmasse konstruiert sind.
Die chiralen sauren Selektoren haben vorzugsweise die folgenden zusätzlichen strukturellen Merkmale, vorzugsweise in Kombination:
- große Nähe der funktionellen Säuregruppe zum nächsten stereogenen Zentrum, was bedeutet, dass die Säurefunktion entweder in α-, β- oder γ-Position zum stereogenen Zentrum liegt,
- sterische Barrieren, die sperrige aliphatische, alicyclische oder aromatische Gruppen sind,
- aromatische Gruppen mit π-sauren oder π-basischen Eigenschaften als π-π-Wechselwirkungsstellen.

Die erfindungsgemäßen funktionalisierten Materialien sind vorzugsweise aus einem chiralen sauren Selektor geringer Molekülmasse und einer Polymermatrix, die durch einen Spacer oder Tether miteinander verbunden sind, konstruiert, wobei die funktionelle Säuregruppe des chiralen sauren Selektors geringer Molekülmasse aus der Gruppe ausgewählt sein kann, die eine Sulfonsäure, Phosphonsäure, Phosphinsäure, Phosphorsäure, Borsäure, ein Phosphonsäuremonoamid, Phosphorsäuremonoamid, eine Amidosulfonsäure und andere umfasst.

Der chirale saure Selektor geringer Molekülmasse wird vorzugsweise auf einem festen Träger immobilisiert, der ausgewählt ist aus der Gruppe bestehend aus Siliciumdioxid (SiO₂), Aluminiumoxid (Al₂O₃), Zirconiumdioxid (ZrO₂), Titanoxid (TiO₂), durch Sol-Gel-Technologie hergestellten Matrizen, organisch-anorganischen, kieselerdehaltigen Hybridmaterialien, gegebenenfalls vemetzten Polysiloxanen, jedem aus Vinylmonomeren erhaltenen Polymer, gegebenenfalls vemetzten Poly(meth)acrylaten, gegebenenfalls vernetzten Poly(meth)acrylamiden, gegebenenfalls vernetzten Polystyrolen, gemischten Styrol-(Meth)acrylatpolymeren, Ringöffnungsmethathesepolymeren, Polysacchariden, Agarose und eine der in der Gruppe, die Perlen, monolithische oder kontinuierliche Materialien, Nanopartikel, Membrane, Harze und oberflächenbegrenzte Schichten umfasst, enthaltenen Formen besitzt.

Der chirale Säureselektor kann in ein anorganisches, organisches oder anorganisch/organisches hybridartiges Polymer eingebaut sein, das aus einem chiralen funktionellen Säuremonomer geringer Molekülmasse erhalten wird, wobei das funktionelle Monomer z.B. eine Vinylverbindung oder ein Alkoxysilan ist und das Polymer eine der in der Gruppe, die Perlen, monolithische oder kontinuierliche Materialien, Nanopartikel, Membrane, Harze und oberflächenbegrenzte Schichten umfasst, enthaltenen Formen besitzt.

Der Spacer, Linker oder Tether hat jegliche Länge und Funktionalität oder kann die allgemeine Struktur -(CH₂)ₙᵢ-Y-(CH₂)ₙⱼ- haben, wobei Y fehlt oder irgendeine der untenstehend gezeigten funktionellen Gruppen (a) - (k) ist und nᵢ, nⱼ Ziffern zwischen 1 und 18 sind.

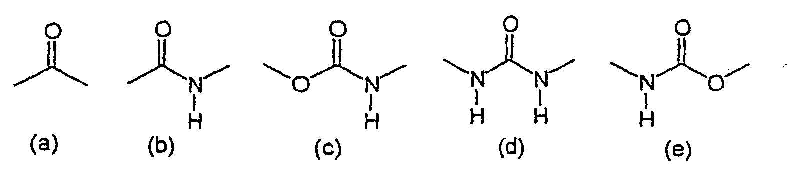

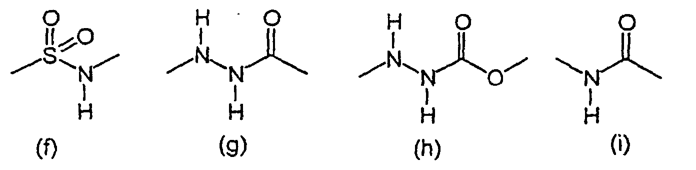

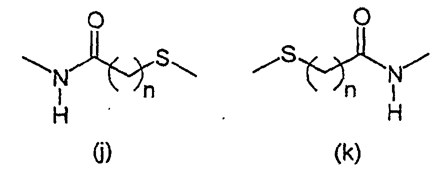

Der chirale Säureselektor geringer Molekülmasse kann ausgewählt sein aus der Gruppe bestehend aus natürlichen und nicht natürlichen Aminosäuren, Hydroxycarbonsäuren, Aminophosphonsäuren, Aminophosphinsäuren, Aminosulfonsäuren, Hydroxysulfonsäuren, Amidosulfonsäuren, Aminoborsäuren, Hydroxyphosphonsäuren, Mercaptophosphonsäuren, Hydroxyphosphinsäuren, Amidophosphonsäuren, Phosphonsäuremonoamiden, Phosphorsäuremonoamiden, Weinsäurederivaten, Mandelsäurederivaten, Camphersulfonsäurederivaten, linearen oder zyklischen, natürlichen und nicht natürlichen Peptiden, linearen oder zyklischen Sulfopeptiden, linearen oder zyklischen Phosphonopeptiden oder einer Verbindung, die aus zumindest einem der Bestandteile dieser Gruppe konstruiert ist.

Das chirale Synthon, aus dem der chirale saure Selektor geringer Molekülmasse synthetisiert wird, wird aus der Gruppe von obenstehend spezifizierten chiralen Verbindungen genommen und passt zu irgendeiner der untenstehend gezeigten allgemeinen Strukturen (1) - (15), wobei X ausgewählt sein kann aus der Gruppe bestehend aus Phosphonsäure, Sulfonsäure, Phosphinsäure, Boronsäure, Phosphorsäure, Amidophosphonsäure, Amidosulfonsäure, Amidophosphinsäure, wobei Y die Bedeutung einer der obenstehend dargelegten Gruppen (a) - (k) hat und wobei R, R₁.....Rᵢ einer der Substituenten aus der Gruppe bestehend aus Wasserstoff, gegebenenfalls substituierten aliphatischen, aromatischen, araliphatischen, heteroaromatischen und alicyclischen Substituenten ist und wobei der chirale saure Selektor geringer Molekülmasse oligomerisiert, polymerisiert, immobilisiert, aufpolymerisiert, zusammengesetzt wird, u.zw. über irgendeinen der Substituenten R, R₁.....Rᵢ, die einen wie obenstehend dargelegten Spacer inkorporieren.

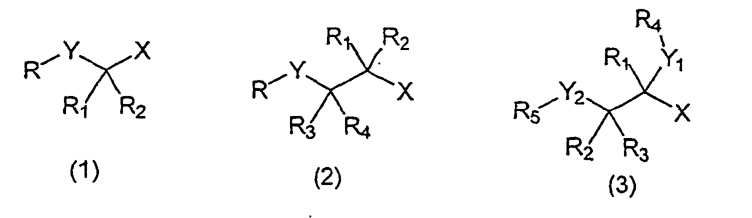

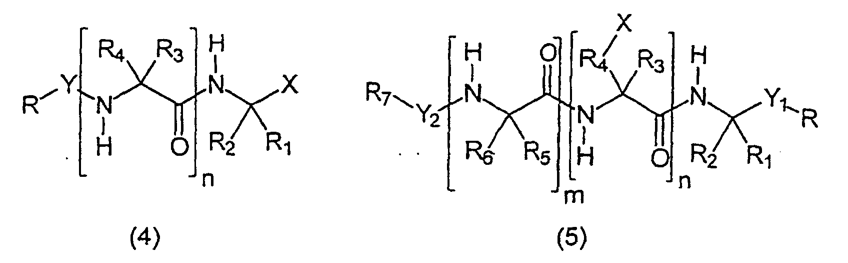

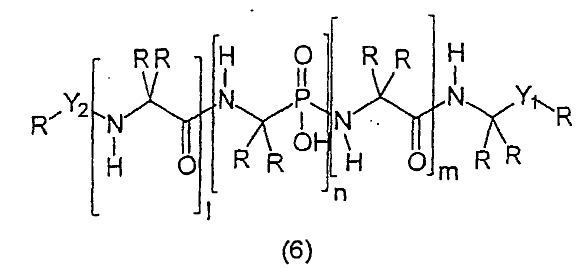

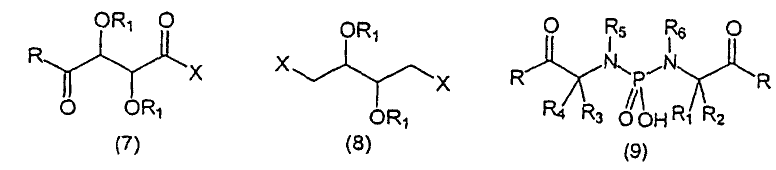

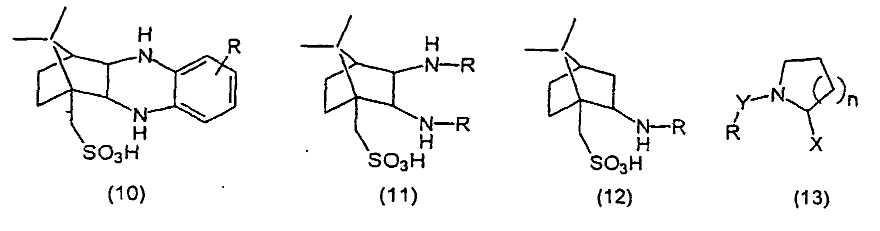

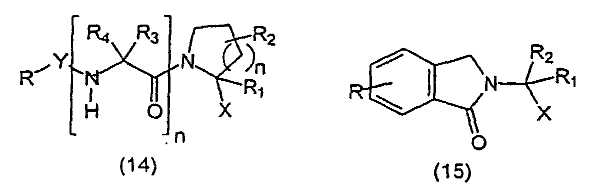

Der chirale saure Selektor geringer Molekülmasse wird vorzugsweise auf thiol-, amino-, hydroxy-, carboxy-, epoxy-, vinylmodifiziertem Siliciumdioxid, Polymethacrylatpolymerperlen und -harzen, Polyacrylamidpolymerperlen und -harzen, tentakelartigem Siliciumdioxid oder organischen Polymerperlen und -harzen immobilisiert.

Der Spacer, der den chiralen sauren Selektor geringer Molekülmasse an den wahlweise modifizierten oder aktivierten Träger bindet, kann durch eine Radikal-Additionsreaktion eines thiolalkylmodifizierten Trägers an eine an der Selektorkomponente angebrachte Vinylgruppe erzielt werden oder kann durch asymmetrische Umsetzung eines Diisocyanats mit einem amino- oder hydroxyalkylmodifizierten Träger und einer amino- oder hydroxymodifizierten Selektorkomponente oder durch Umsetzung eines amino-, hydroxy- oder thiolmodifizierten Trägers mit einem chlor- oder bromalkanoylderivatisierten Selektor, oder durch Kopplung eines aminomodifizierten Trägers und eines aminomodifizierten Selektors durch Umsetzung von einem der 2 Bestandteile mit einem Dicarbonsäureanhydrid-Spacerbestandteil und nachfolgende Aktivierung der resultierenden Carbonsäurefunktion und Umsetzung mit dem zweiten Aminobestandteil oder Alkoxysilan mit einer terminalen Funktionalität zur Kopplung an eine Selektorkomponente und nachfolgende Bindung des resultierenden alkoxysilanmodifizierten Selektors an Kieselgel oder durch irgendeinen anderen geeigneten Ansatz für eine Selektorimmobilisierung erzielt werden.

Die obenstehend erwähnten X-, Y- und R-Gruppen oder Substituenten können die wie untenstehend dargelegte Bedeutung haben:

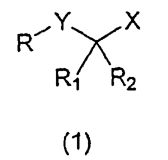

| X | Y | R₁ | R₂ | R |
|---|---|---|---|---|
| -COOH | (b) | H | Siliciumdioxidpropyl-4-(3-thiopropoxy)benzyl- | 3,5-Dichlorphenyl |
| -COOH | (b) | H | *tert*-Butyl | |

Die X-, Y- und R-Gruppen oder Substituenten können auch die wie untenstehend dargelegte Bedeutung haben: 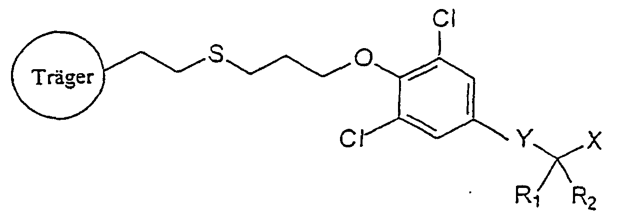 oder 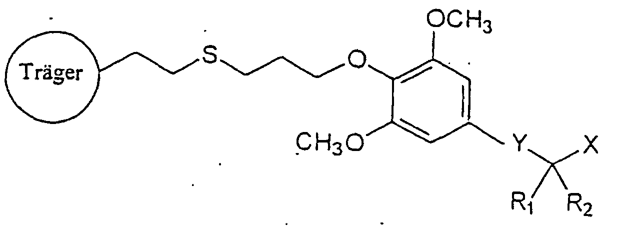 oder

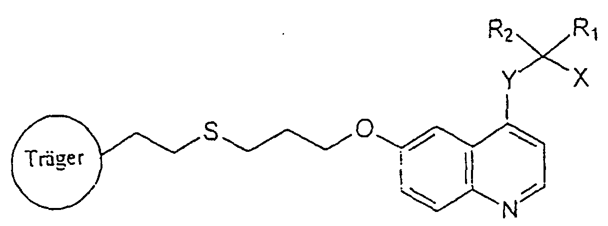

| X | Y | R₁ | R₂ |
|---|---|---|---|
| -COOH | (b) | H | Isobutyl oder Neopentyl oder 1-Adamantylmethyl oder Naphthyl |
| -PO(OH)₂ | (b) | H | *tert*-Butyl oder Isobutyl oder Neopentyl oder 1-Adamantylmethyl oder Naphthyl |
| -SO₃H | (b) | CH₃ | *tert*-Butyl oder Isobutyl oder Neopentyl oder 1-Adamantylmethyl oder Naphthyl |
| -COOH | (d) | H | *tert*-Butyl oder Isobutyl oder Neopentyl oder 1-Adamantylmethyl oder Naphthyl |
| -PO(OH)₂ | (d) | H | *tert*-Butyl oder Isobutyl oder Neopentyl oder 1-Adamantylmethyl oder Naphthyl |
| -COOH | (e) | H | Methyl oder *tert*-Butyl oder Isobutyl oder Neopentyl oder 1-Adamantylmethyl oder Naphthyl oder Phenyl |
| -PO(OH)₂ | (e) | H | Methyl oder *tert*-Butyl oder Isobutyl oder Neopentyl oder 1-Adamantylmethyl oder Naphthyl oder Phenyl |
| -SO₃H | (e) | H | Methyl oder *tert*-Butyl oder Isobutyl oder Neopentyl oder 1-Adamantylmethyl oder Naphthyl oder Phenyl oder Pyridyl |
| -COOH | (f) | H | *tert*-Butyl oder Isobutyl oder Neopentyl oder 1-Adamantylmethyl oder Naphthyl |
| -PO(OH)₂ | (f) | H | *tert*-Butyl oder Isobutyl oder Neopentyl oder 1-Adamantylmethyl oder Naphthyl |
| -COOH | (b) | H | 4-(HO)₂B-Benzyl |

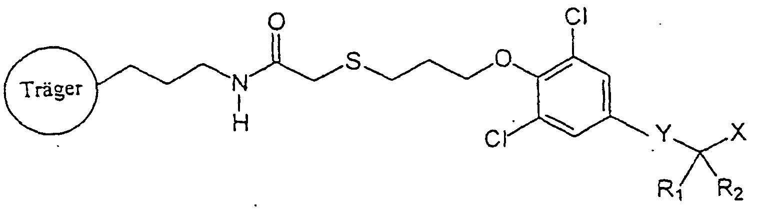

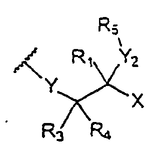

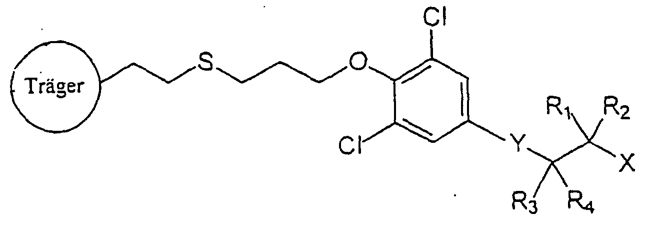

| X | Y | R₁ | R₂ | R₃ | R₄ |
|---|---|---|---|---|---|
| -COOH | (b) | H | H | H | *tert*-Butyl |
| -PO(OH)₂ | (b) | H | H | H | *tert*-Butyl |
| -SO₃H | (b) | H | H | H | *tert*-Butyl |
| -SO₃H | (b) | H | H | H | -COOH oder Aryl-NHCO- oder Alkyl-NHCO- oder *tert*-Butyl-NHCO- |
| -SO₃H | (b) | CH₃ | CH₃ | H | -COOH oder Aryl-NHCO- oder Alkyl-NHCo- oder *tert*-Butyl-NHCO- |
| -PO(OH)₂ | (e) | H | -NHCOR | H | Phenyl oder Methyl |
| -PO(OH)₂ | (b) | H | -OH oder OR | H | Methyl |
| -PO(OH)₂ | (b) | H | -OCONHR | H | Methyl |
| -OPO(OH)₂ | (b) | H | H | H | -COOH oder -CONHR |
| -B(OH)₂ - | (b) | H | H | H | *tert*-Butyl |

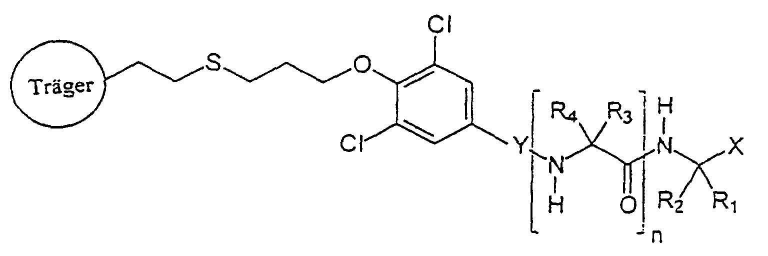

| X | Y | R₁ | R₂ | R₃ | R₄ | n |
|---|---|---|---|---|---|---|
| -COOH | (a) | H | *tert*-Butyl oder Isobutyl oder Phenyl | H | *tert*-Butyl oder Isobutyl oder Phenyl | 1 |
| -PO(OH)₂ | (a) | H | *tert*-Butyl oder Isobutyl oder Phenyl | H | *tert*-Butyl oder Isobutyl oder Phenyl | 1 |
| -CH₂-SO₃H | (a) | H | *tert*-Butyl | H | *tert*-Butyl oder Isobutyl oder Phenyl | 1 |
| -COOH | (i) | H | *tert*-Butyl oder Isobutyl oder Phenyl | H | *tert*-Butyl oder Isobutyl oder Phenyl | 1 |
| -PO(OH)₂ | (i) | H | *tert*-Butyl oder Isobutyl oder Phertyl | H | *tert*-Butyl oder Isobutyl oder Phenyl | 1 |
| -CH₂-SO₃H | (i) | H | *tert*-Butyl | H | *tert*-Butyl oder Isobutyl oder Phenyl | 1 |
| -COOH | (a) | H | *tert*-Butyl oder Isobutyl oder Phenyl | H | *tert*-Butyl oder Isobutyl oder Phenyl | 2 |
| -PO(OH)₂ | (a) | H | *tert*-Butyl oder Isobutyl oder Phenyl | H | *tert*-Butyl oder Isobutyl oder Phenyl | 2 |
| -CH₂-SO₃H | (a) | H | *tert*-Butyl | H | *tert*-Butyl oder Isobutyl oder Phenyl | 2 |

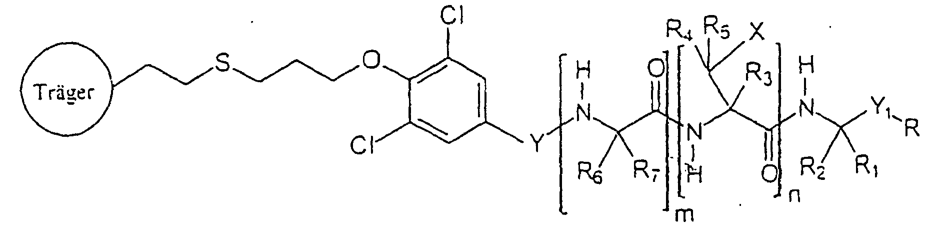

| X | Y | Y₁ | R₁ | R₂ | R₃ | R₄ | R₅ | n | R₆ | R₇ | m | R |
|---|---|---|---|---|---|---|---|---|---|---|---|---|
| -SO₃H | (a) | -CONH- | H | Isobutyl | H | H oder CH₃ | H oder CH₃ | 1 | H | Isobutyl | 1 | *tert*-Butyl oder Aryl |
| -PO₄H₂ | (a) | -CONH- | H | Isobutyl | H | H | H | 1 | H | Isobutyl | 1 | *tert*-Butyl oder Aryl |

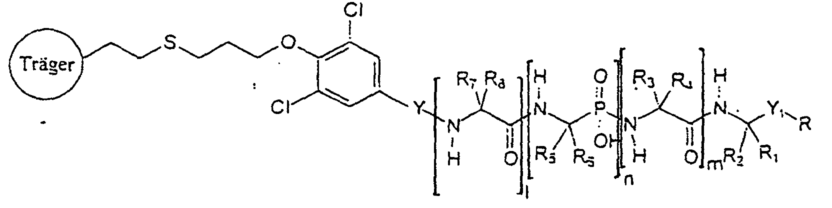

| Y | Y₁ | R₁ | R₂ | R₃ | R₄ | R₅ | n | R₆ | R₇ | R₈ | m | l | R |
|---|---|---|---|---|---|---|---|---|---|---|---|---|---|
| C=O | CONH- | H | iBu | H | phenyl | H | l | iBu | H | phenyl | l | l | tBu |
| C=O | CONH- | H | iBu | H | iBu | H | l | phenyl | H | iBu | l | l | tBu |

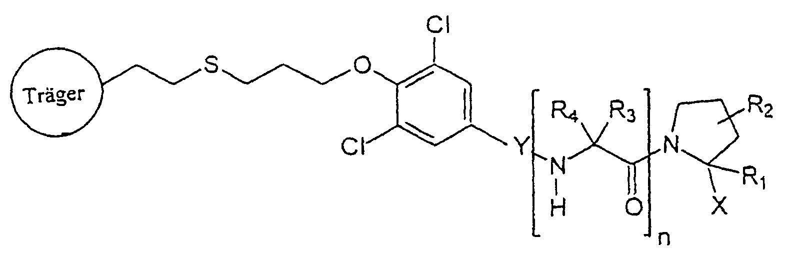

| X | Y | R₁ | R₂ | R₃ | R₄ |
|---|---|---|---|---|---|
| -PO(OH)₂ | (a) | H | - | H | Isobutyl |
| -CH₂₋-SO₃H | (a) | H | - | H | Isobutyl |

Die vorliegende Erfindung bezieht sich weiters auf die Verwendung eines der hierin beschriebenen funktionalisierten Materialien für die Molekülerkennung, Bindung und Trennung von chiralen Verbindungen, wobei die chirale Verbindung ausgewählt ist aus der Gruppe, die basische Arzneimittel, basische Synthone oder Zwischenverbindungen, Aminosäuren, Peptide, Proteine, Nucleotide, Aminoglykoside und andere basische Biomoleküle umfasst, und auf Verfahren, welche zur Bildung von reversiblen Molekülverbindungsprodukten und zur Trennung von Mischungen dieser Verbindungen die Verbindungen mit zumindest einem der hierin beschriebenen funktionalisierten Materialien in Kontakt bringen, wobei die Schritte des in Kontakt Bringens und Trennens mittels
a. Flüssigphasentrenntechniken, worunter die Flüssigchromatographie, Kapillarelektrophorese, Kapillarelektrochromatographie oder überkritische Flüssigchromatographie fällt, oder
b. einer Extraktionsmethodik, worunter die Flüssig-Flüssig-Extraktion, Gegenstrom-Flüssigchromatographie, zentrifugale Verteilungschromatographie, Flüssig-Fest-Extraktionstechnologie, unterstützte Flüssigmembran- oder Fixed-Site-Membrantechnologie fällt,
durchgeführt werden.

### Kurze Beschreibung der Zeichnungen

Fig. 1 zeigt schematisch die Struktur des erfindungsgemäßen chiralen Selektors, wobei 1 den chiralen Selektor bezeichnet, 2 chirale Komponente bedeutet, X Kationenaustauschgruppe bedeutet, 3 Spacer bedeutet und 4 Träger bedeutet.

### Beispiele

Die vorliegende Erfindung wird nunmehr unter Bezugnahme auf die folgenden, nicht einschränkenden Beispiele beschrieben.

### Beispiel 1: Synthese eines auf (S)-O-Allyl-N-(3,5-dichlorbenzoyl)-tyrosin, N-DCB-O-Allyl-Tyr, basierenden, schwachen chiralen Kationenaustauschers

### (a) Synthese eines Selektors vom Kationenaustauschtyp

N-Boc-(S)-Tyrosin (3 mmol) (Propeptide, Vert Le Petit, France) wurde in 2 ml Dichlormethan und 2 ml Trifluoressigsäure (Aldrich) aufgelöst, und die Reaktionsmischung wurde 3 Stunden lang bei Raumtemperatur gerührt. Nach Entfernung der Lösungsmittel unter reduziertem Druck wurde (S)-O-Allyl-Tyrosin als Rohprodukt erhalten, das ohne weitere Reinigung für den nächsten Schritt verwendet wurde.

3,5-Dichlorbenzoesäure-N-hydroxysuccinimidester wurde gemäß Standardreaktionsprotokollen aus äquimolaren Mengen N-Hydroxysuccinimid (Aldrich) und 3,5-Dichlorbenzoesäure (98%) (Acros Organics, Geel, Belgien) in Ethylacetat in Gegenwart einer äquimolaren Menge Dicyclohexylcarbodiimid (Aldrich) hergestellt.

3 mmol (S)-O-Allyl-Tyrosin und 15 mmol Natriumbicarbonat wurden in 100 ml Wasser aufgelöst. 3 mmol 3,5-Dichlorbenzoesäure-N-hydroxysuccinimidester wurden unter kräftigem Rühren in dieser Lösung suspendiert. Nach 15 Stunden wurde das nicht umgesetzte Reagenz durch Filtration entfernt und das Filtrat durch tropfenweise Zugabe von 1M HCl angesäuert. Der so gebildete Niederschlag wurde durch Filtration isoliert und mit Wasser gewaschen. Das Rohprodukt wurde mittels Flashchromatographie mit Siliciumdioxid weiter gereinigt (Chloroform-Methanol als Eluent mit zunehmenden Volumenanteilen an Methanol) (85% Gesamtausbeute).
¹H NMR (CDCl₃) δ 3,25 (q, 2H) 4,5 (d, 2H) 5,02 (q, 1H) 5,3 (d, 1H) 5,4 (d, 1H) 6,05 (m, 1H) 6,45 (d, 1H) 6,85 (d, 2H) 7,05 (d, 2H) 7,35 (s, 1H) 7,55 (s, 2H) ppm.

### (b) Immobilisierung eines Selektors auf Siliciumdioxid

Kromasil 100-3,5 µm (erworben von Eka Chemicals, Bohus, Schweden) wurde durch Refluxieren in Toluol mit 3-Mercaptopropyltrimethoxysilan (ABCR, Karlsruhe, Deutschland) modifiziert (Elementaranalyse der modifizierten Partikel: 4,58% C, 1,0% H).

Anschließend wurde (S)-N-DCB-O-Allyl-Tyr durch eine einem Standardverfahren nachfolgende Radikal-Additionsreaktion kovalent an diesem thiolmodifizierten Sorptionsmittel angebracht [M. Lämmerhofer und W. Lindner, J. Chromatogr. A, 741 (1996) 33]. Eine Elementaranalyse der chiral modifizierten Siliciumdioxidpartikel erbrachte die folgenden Ergebnisse: 15,19% C, 1,73% H, 0,64% N für CSP 1 mit dem N-DCB-O-Allyl-Tyr-Selektor (was einer mittleren SO-Belegung von 0,44 mmol SO/g CSP entspricht).

### Beispiel 2: Synthese eines auf (R)-N-(4-Allyloxy-3,5-dichlorbenzoyl)-1-amino-3-methylbutanphosphonsäure, N-(4-Allyloxy-DCB)-LeuP, basierenden, starken chiralen Kationenaustauschers.

### (a) Synthese eines Selektors vom Kationenaustauschtyp

Für die Synthese von 4-Allyloxy-3-5-dichlorbenzoesäurechlonid wurden 9,7 mmol 3,5-Dichlor-4-hydroxybenzoesäure (Acros Organics, Geel, Belgien), 20 mmol Kaliumhydroxid und 11.6 mmol Allylbromid (Aldrich) 24 Stunden lang in Ethanol refluxiert. Nach der Hydrolyse von Esternebenprodukten mit 1,8 M Kaliumhydroxidlösung wurde die Carbonsäure durch Ansäuerung mit 2M HCl ausgefällt. Eine Rekristallisation aus Petrolether-Methanol erbrachte die reine Carbonsäure in 92%iger Ausbeute. Ein 0,5 mmol-Aliquot wurde danach 3 Stunden lang mit Thionylchlorid refluxiert, bis zur Trockenheit abgedampft, und das verbleibende Säurechlorid wurde für eine nachfolgende Reaktion mit der Aminophosphonsäure in trockenem Dioxan aufgelöst.

0,5 mmol (R)-1-Amino-3-methylbutanphosphonsäure, das Phosphonsäureanalogon von L-Leucin, L-LeuP (hinsichtlich der Synthese siehe anderswo [F. Hammerschmidt und F. Wuggenig, Tetrahedron Asymmetr., 10 (1999) 1709), wurde in 10 ml trockenem Dioxan suspendiert. Nach Zugabe von 1,5 mmol N,O-Bis-trimethylsilylacetamid (BSA, Aldrich) wurde die Mischung 3 Stunden lang bei 70°C erhitzt, bis eine klare Lösung erhalten wurde. Danach wurde 0,5 mmol N-Ethyldiisopropylamin hinzugefügt, gefolgt von der tropfenweise Zugabe von 0,5 mmol 4-Allyloxy-3,5-dichlorbenzoesäurechlorid unter Eiskühlung. Die Reaktionsmischung wurde langsam auf Raumtemperatur ansteigen gelassen. Das Abdampfen des Lösungsmittels nach 4-stündigem Rühren und das Clean-up des Rohprodukts durch Flashchromatographie mit Siliciumdioxid und Chloroform-Methanol-Eluenten bei zunehmenden Volumenanteilen an Methanol erbrachte das reine Produkt in 50%iger Ausbeute.
¹H NMR (DMSO) δ 0,85 (d, 6H) 1,4-1,7 (m, 3H) 4,3 (q, 1H) 4,6 (d, 2H) 5,3 (d, 1H) 5,45 (d, 1H) 6,1 (m, 1H) 8,0 (s, 2H) 8,45 (d, 1H)

### (b) Immobilisierung von SO: gleich wie im Beispiel 1b

Eine Elementaranalyse der chiral modifizierten Siliciumdioxidpartikel (siehe Fig. 1) erbrachte die folgenden Ergebnisse: 8,02% C, 1,25% H, 0,3% N für CSP 2 mit dem N-(4-Allyloxy-DCB)-LeuP-Selektor (was einer SO-Belegung von 0,21 mmol SO/g CSP entspricht).

### Beispiel 3: Verwendung von Materialien aus Beispiel 1 und 2 für die Enantiomertrennung von chiralen Basen:

### (a) Vergleich starker versus schwacher chiraler Kationenaustauscher

Es wurde angenommen, dass der Austausch der Carbonsäurefunktion des Selektors durch eine Phosphonsäuregruppe als primärer ionischer Wechselwirkungsstelle in Bezug auf SO-SA-Bindeenthalpien und Enantioselektivitäten günstig war. Die in Tabelle 1 gezeigten Daten einer nicht wässrigen Kationenaustausch-Kapillarelektrochromatographie (NA-CEC) bestätigen die höhere Enantioselektivität des starken Kationenaustauschers (CSP 2, Material aus Beispiel 2, basierend auf einem N-(4-Allyloxy-DCB)-LeuP-Selektor) im Vergleich zum schwachen Gegenstück (CSP 1, Material aus Beispiel 1, basierend auf (S)-N-DCB-O-Allyl-Tyr).

**Tabelle 1:**

| Enantioselektivitäten einiger basischer Analyten auf CSP 1 und CSP 2.^{a} | | | | | | |
|---|---|---|---|---|---|---|
| **CSP 1** | | | | | | |
| **Analyten** | **t**_{**R1**} **(min)** | **t**_{**R2**} **(min)** | **α**^{**b**} | **R**_{**s**} | **N**_{**1**}**(m**^{**-1**}**)** | **N**_{**2**}**(m**^{**-1**}**)** |
| Chinin/Chinidin | 13,19 | 15,12 | 1,21 | 3,70 | 45900 | 49400 |
| Mefloquin | 13,40 | 13,85 | 1,05 | 1,01 | 65400 | 59700 |
| Metoprolol | 11,10 | | 1,00 | - | 37500 | |
| Atenolol | 14,41 | | 1,00 | - | 44000 | |

| **CSP 2** | | | | | | |
|---|---|---|---|---|---|---|
| **Analyten** | **t**_{**R1**} **(min)** | **t**_{**R2**} **(min)** | **α**^{**b**} | **R**_{**s**} | **N**_{**1**}**(m**^{**-1**}**)** | **N**_{**2**}**(m**^{**-1**}**)** |
| Chinin/Chinidin | 13,48 | 15,37 | 1,23 | 4,53 | 62800 | 93400 |
| Mefloquin | 22,49 | 25,07 | 1,15 | 3,16 | 61600 | 49000 |
| Metoprolol | 12,83 | 13,31 | 1,06 | 1,39 | 81500 | 100400 |
| Atenolol | 19,00 | 19,67 | 1,05 | 1,33 | 94400 | 95300 |

| | | | | | | |
|---|---|---|---|---|---|---|
| ^{a} Säulenabmessung: 250 (335) x 0,1 mm i.d., mobile Phase: 50 mM 2-Aminobutanol und 12 mM HCOOH in ACN - MeOH (80/20, Vol.%); T: 20°C; Spannung: + 15 kV; Einspritzung: +5 kV für 5 s | | | | | | |
| ^{b} α = kₐₚₚ₂/kₐₚₚ₁; kₐₚₚ=(t_{R}-t₀) / t₀; t₀(CSP 1) = 3,91 min; t₀(CSP 2) = 4,90 min | | | | | | |

Tabelle 1 zeigt klar, dass der stärker saure Kationenaustauscher beträchtlich bessere Ergebnisse erbringt.

### (b) Verwendung eines auf einem N-(4-Allyloxy-DCB)-LeuP-Selektor (CSP 2) basierenden, starken chiralen Kationenaustauschers für die Enantiomertrennung von unterschiedlichen β-Blockem durch eine nicht wässrige Kapillarelektrochromatographie (NA-CEC)

**Tabelle 2:**

| NA-CEC-Enantiotrennungen von verschiedenen β-Blockern auf CSP 2.^{a} | | | | | | |
|---|---|---|---|---|---|---|
| **Analyten** | **t**_{**R1**} **(min)** | **t**_{**R2**} **(min)** | **α** | **R**_{**s**} | **N**_{**1**}**(m**^{**-1**}**)** | **N**_{**2**}**(m**^{**-1**}**)** |
| Talinolol | 25,16 | 26,37 | 1,06 | 1,68 | 80800 | 82000 |
| Bupranolol | 13,19 | 12,59 | 1,05 | 1,21 | 90200 | 117500 |
| Bunitrolol | 11,88 | 12,27 | 1,06 | 1,11 | 58000 | 91400 |
| Celiprolol | 14,01 | 14,44 | 1,05 | 1,20 | 97000 | 99500 |
| Penbutolol | 15,09 | 15,67 | 1,06 | 1,46 | 94000 | 98000 |
| *tert*-Butyl-Atenolol | 19,14 | 20,07 | 1,06 | 1,75 | 90200 | 85400 |
| *tert*-Butyl-Metoprolol | 12,96 | 13,58 | 1,07 | 2,02 | 119300 | 126000 |
| *tert*-Butyl-Propanolol | 14,88 | 15,60 | 1,07 | 1,95 | 110100 | 105100 |
| Atenolol^{b} | 19,00 | 19,67 | 1,05 | 1,33 | 94400 | 95300 |
| Metoprolol | 12,84 | 13,31 | 1,06 | 1,39 | 81500 | 100400 |
| Propranolol | 15,12 | 15,44 | 1,03 | 0,67 | 58100 | 67600 |
| Acebutolol | 13,17 | 13,47 | 1,03 | 0,7 | 64200 | 63200 |
| Practolol | 16,85 | 17,44 | 1,05 | 1,30 | 91400 | 93200 |
| Alprenolol | 11,79 | 12,00 | 1,03 | 0,63 | 78000 | 90600 |
| Pindolol^{c} | 15,99 | 16,39 | 1,04 | 0,95 | 88300 | 101400 |
| Mepindolol | 15,27 | 15,58 | 1,03 | 0,68 | 82200 | 73000 |
| Metipranolol | 11,34 | 11,56 | 1,03 | 0,59 | 53400 | 69200 |
| Normetoprolol^{d} | 5,59 | 5,73 | 1,16 | 0,61 | 65200 | 29600 |
| Ethoxymethyl-Metoprolol | 11,67 | 12,07 | 1,06 | 1,40 | 105200 | 116300 |
| Ethoxyethyl-Metoprolol | 11,82 | 12,23 | 1,06 | 1,25 | 84000 | 96800 |
| 4-Methoxy-Propranolol | 14,38 | 14,62 | 1,02 | 0,62 | 108600 | 76100 |
| 4-Hydroxy-Propranolol | 24,22 | 24,54 | 1,02 | 0,42 | - | - |
| O-Allyl-Propranolol | 11,15 | 11,43 | 1,04 | 0,96 | 84000 | 115400 |
| Oxprenolol | 11,38 | 11,65 | 1,04 | 0,79 | 52200 | 106200 |
| Carazolol | 16,88 | 17,15 | 1,02 | 0,59 | 126400 | 73400 |
| Sotalol | 13,92 | 14,44 | 1,06 | 1,49 | 100500 | 108200 |
| Nifenalol | 10,41 | 10,88 | 1,09 | 1,11 | 33400 | 53100 |

| | | | | | | |
|---|---|---|---|---|---|---|
| ^{a} Bedingungen siehe Tabelle 2, t₀ (Aceton) = 4,9 min | | | | | | |
| ^{b} zuerst eluiertes Enantiomer: (S) | | | | | | |
| ^{c} zuerst eluiertes Enantiomer: (-) | | | | | | |
| ^{d} Eluent: 50 mM 2-Aminobutanol und 4 mM HCOOH in ACN - MeOH (80:20, Vol%); t₀ (Aceton) = 4,78 min | | | | | | |

### (c) Verwendung eines auf einem N-(4-Allyloxy-DCB)-LeuP-Selektor (CSP 2) basierenden, starken chiralen Kationenaustauschers für die Enantiomertrennung von unterschiedlichen basischen Arzneimitteln durch eine nicht wässrige Kapillarelektrochromatographie (NA-CEC)

**Tabelle 3:**

| NA-CEC-Enantiotrennungen von verschiedenen basischen Analyten auf CSP 2.^{a} | | | | | | |
|---|---|---|---|---|---|---|
| **Analyten** | **t**_{**R1**} **(min)** | **t**_{**R2**} **(min)** | **α** | **R**_{**s**} | **N**_{**1**}**(m**^{**-1**}**)** | **N**_{**2**}**(m**^{**-1**}**)** |
| Propafenon^{b} | 11,34 | 11,58 | 1,04 | 0,64 | 55600 | 62400 |
| Norpropafenon^{b} | 5,46 | 5,57 | 1,11 | 0,73 | 82400 | 99800 |
| Bamethan^{b} | 25,28 | 26,33 | 1,05 | 1,05 | 51000 | 37500 |
| Ephedrin^{b} | 26,16 | 26,42 | 1,01 | 0,41 | - | - |
| Mefloquin^{b} | 22,49 | 25,07 | 1,15 | 3,16 | 61600 | 49000 |
| Chinidin/Chinin^{b} | 13,48 | 15,37 | 1,23 | 4,53 | 62800 | 93500 |
| Oxyphencyclimin^{b} | 20,61 | 21,59 | 1,06 | 2,15 | 134700 | 138400 |
| Etidocain^{c} | 16,13 | 16,49 | 1,03 | 1,51 | 254000 | 360200 |
| Bupivacain^{d} | 14,18 | 14,42 | 1,03 | 0,9 | 192000 | 187800 |
| Trögersche Base^{d} | 6,59 | 6,70 | 1,08 | 0,77 | 150000 | 100000 |
| Promethazin^{d} | 19,80 | 20,19 | 1,03 | 1,46 | 361000 | 375800 |
| Dixyrazin^{d} | 20,29 | 20,46 | 1,01 | 0,38 | - | - |
| Pheniramin^{d} | 13,58 | 13,82 | 1,03 | 0,58 | 103800 | 50800 |
| Doxylamin^{d} | 13,18 | 14,42 | 1,16 | 0,79 | 3900 | 14200 |
| Benzetimid^{e} | 8,25 | 8,36 | 1,04 | 0,52 | 192600 | 65000 |
| Camylofin^{c} | 11,86 | 12,17 | 1,05 | 0,48 | 40000 | 14000 |
| Lorazepam^{f} | 7,60 | 7,79 | 1,08 | 0,7 | 58600 | 50600 |
| O-(*tert*-Butylcarbamoyl)-Mefloquin^{f} | 6,78 | 9,34 | 2,21 | 15,28 | 85200 | 53400 |

| | | | | | | |
|---|---|---|---|---|---|---|
| ^{a} Spannung: + 15 kV, Elektrolyten: siehe Fußnote b-f, hinsichtlich anderer Bedingungen siehe Tabelle 2; | | | | | | |
| ^{b} 50 mM 2-Aminobutanol, 12 mM HCOOH; t₀ (Aceton) = 4,90 min | | | | | | |
| ^{c} 10 mM TEOA, 100 mM HCOOH; t₀ (Aceton) = 4,99 min | | | | | | |
| ^{d} 10 mM 2-Aminobutanol, 100 mM HCOOH; t₀ (Aceton) = 5,41 min | | | | | | |
| ^{e} 10 mM 2-Aminobutanol, 2,4 mM HCOOH; t₀ (Aceton) = 5,71 min | | | | | | |
| ^{f} 50 mM TEOA, 5 mM AcOH; Spannung: + 25 kV; t₀ (Aceton) = 5,32 min | | | | | | |

Die Tabellen 2 und 3 veranschaulichen klar das breite Anwendbarkeitsspektrum der erfindungsgemäßen Kationenaustauscher für chirale Basen verschiedener Arten.

### Beispiel 4: Synthese eines auf (R)-N-(4-Allyloxy-3,5-dichlorbenzoyl)-2-amino-3,3-dimethylbutansulfonsäure basierenden, starken chiralen Kationenaustauschers

### (a) Synthese des Selektors:

Der auf Sulfonsäure basierende chirale Selektor wurde gemäß dem wie in Beispiel 2a beschriebenen Vorgang durch N-Acylierung von (R)-2-Amino-3,3-dimethylbutansulfonsäure synthetisiert, wobei 4-Allyloxy-3,5-dichlorbenzoesäurechlorid eingesetzt wurde. Nach Abdampfung des Lösungsmittels wurde das Produkt mittels präparativer Chromatographie auf einer auf *tert*-Butylcarbamoylchinidin basierenden, chiralen stationären Phase (dₚ = 15 µm; Säulenabmessung: 250 x 16 mm ID; Eluent: Methanol - 1,5 M Ammoniumacetat (80:20, Vol.%) (pHₐ = 6,0); Durchflussgeschwindigkeit: 6 ml/min, Raumtemperatur) aus der rohen Reaktionsmischung isoliert. Die Reinfraktion des chromatographischen Durchlaufs wurde auf einem Kationenaustauscher entsalzt (Dowex 50W, Wasser als Eluent). Das Eluat wurde abgedampft, wodurch sich das Reinprodukt ergab.
¹H NMR (D₂O) δ 7,6 (s, 2H), 6,0 (m, 1H), 5,25 (d, 1H), 5,1 (d, 1H), 4,45 (d, 2H), 4,1 (d, 1H), 2,7-3,2 (m, 2H), 0,75 (s, 9H) ppm.

### (b) Immobilisierung von SO auf thiolmodifiziertem Kromasil 100-3,5 µm:

Ein ähnlicher Vorgang wie in Beispiel 1b beschrieben wurde eingesetzt, allerdings wurde eine Wasser-Methanol-Mischung (80:20, Vol.%) als Lösungsmittel und 2,2'-Azobis(2-amidinopropan)dihydrochlorid als Initiator verwendet.

100 mg Selektor wurden in 3 ml einer Wasser-Methanol-Mischung (80:20, Vol.%) aufgelöst. 200 mg 3-Thiolpropyl-modifiziertes Kromasil 100 - 3,5 µm wurden in dieser Lösung suspendiert, und 10 mg wasserlöslicher Initiator, 2,2'-Azobis(2-amidinopropan)dihydrochlorid, wurden hinzugefügt. Die Mischung wurde 15 Minuten lang beschallt und 10 Minuten lang mit N₂ gespült. Die Radikal-Additionsreaktion wurde bei 50°C über Nacht (24 h) weitergehen gelassen. Danach wurde das modifizierte Siliciumdioxid isoliert und mit verschiedenen Lösungsmitteln gewaschen.

Eine Elementaranalyse der chiral modifizierten Siliciumdioxidpartikel erbrachte die folgenden Ergebnisse: 10,06% C, 1,62% H (was einer SO-Belegung von 0,29 mmol SO/g CSP entspricht).

### (c) Testchromatogramm: Trennung von Clenbuterolenantiomeren

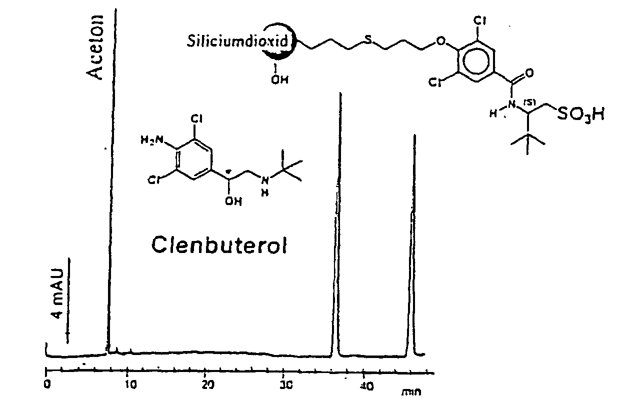

Trennung der Enantiomere von Clenbuterol auf einem auf β-Aminosulfonsäure basierenden, starken chiralen Kationenaustauscher durch NA-CEC.
Säulenabmessung: 250 x 0,1 mm I.D. (L_{eff} = 250 mm, Lₜₒₜ = 335 mm), Eluent: 50 mmol/L Ameisensäure und 25 mmol/L 2-Aminobutanol in Acetonitril - Methanol (80:20, Vol.%); Spannung: + 15 kV (18,2 µA); Temperatur: 20°C.

### (d) Elektrochromatographische Ergebnisse:

**Tabelle 4:**

| Trennung von Enantiomeren von verschiedenen chiralen Basen durch NA-CEC | | | | | | | |
|---|---|---|---|---|---|---|---|
| Versuchsbed.: CSP: (S)-N-(4-Allyloxy-3,5-dichlorbenzoyl)-2-amino-3,3-dimethylbutansulfonsäure, die auf 3-Mercaptopropyl-modifiziertem Kromasil 100 3,5 µm immobilisiert ist; Kapillarabmessung: Lₜₒₜ 33,5 cm, L_{eff} 25,0 cm, L_{packed} 25,0 cm; Eluent: 25 mM 2-Amino-1-butanol und 50 mM Ameisensäure in Acetonitril-Methanol (80:20, Vol.%); Spannung: + 15 kV; T: 20°C | | | | | | | |

| Verbindung | t_{R1} | t_{R2} | α | R_{S} | N₁ | N₂ | e.o.^{a} |
|---|---|---|---|---|---|---|---|
| Ephedrin | 25,84 | 27,60 | 1,10 | 3,64 | 47176 | 50190 | (L) |
| Nifenalol | 40,64 | 48,03 | 1,23 | 8,37 | 51065 | 33970 | - |
| Bamethan | 34,26 | 35,25 | 1,04 | 1,69 | 57759 | 56195 | - |
| Sotalol | 32,06 | 33,46 | 1,06 | 2,59 | 57999 | 59337 | (-) |
| Atenolol | 41,67 | 42,24 | 1,02 | 0,7 | 39748 | 44487 | - |
| tert-Butyl-Atenolol | 38,87 | 40,15 | 1,04 | 1,82 | 50618 | 51427 | - |
| Propafenon | 21,93 | 22,78 | 1,06 | 2,05 | 45393 | 47245 | (S) |
| Talinolol | 63,70 | 65,93 | 1,04 | 1,62 | 36951 | 34133 | - |
| Bupranolol | 23,99 | 24,93 | 1,06 | 2,22 | 52401 | 55085 | - |
| Celiprolol | 30,78 | 32,44 | 1,07 | 2,8 | 45394 | 45815 | - |
| Bunitrolol | 24,44 | 25,65 | 1,08 | 2,67 | 48931 | 48769 | - |
| Practolol | 41,42 | 41,86 | 1,01 | 0,59 | 52792 | 49845 | - |
| Oxprenolol | 17,93 | 18,28 | 1,04 | 0,96 | 31350 | 52185 | - |
| Metipranolol | 21,91 | 22,31 | 1,03 | 0,95 | 41433 | 45335 | - |
| Alprenolol | 23,22 | 23,78 | 1,04 | 1,37 | 48425 | 56473 | - |
| Penbutolol | 23,32 | 24,33 | 1,07 | 1,59 | 22402 | 21938 | (S) |
| Isopenbutolol | 24,93 | 25,91 | 1,06 | 2,18 | 50075 | 52309 | (S) |
| Isopenbutolol | 27,80 | 29,17 | 1,07 | 2,63 | 49773 | 47004 | (S) |
| Carazolol | 36,48 | 37,20 | 1,03 | 1.13 | 50456 | 55998 | - |
| Pindolol | 26,12 | 26,65 | 1,03 | 1,07 | 40194 | 54403 | - |
| Mepindolol | 26,62 | 27,16 | 1,03 | 1,17 | 54292 | 55592 | - |
| Acebutolol | 32,72 | 33,91 | 1,05 | 2,03 | 50314 | 53015 | - |
| Propranolol | 29,19 | 29,70 | 1,03 | 0,97 | 50181 | 49762 | - |
| tert-Butyl-Propranolol | 31,55 | 33,02 | 1,06 | 2,6 | 50639 | 54365 | - |
| 4-Methoxy-Propranolol | 32,47 | 33,10 | 1,03 | 1,08 | 49874 | 52499 | - |
| tert-Butyl-Propranolol | 31,87 | 33,25 | 1,06 | 2,41 | 51663 | 51952 | - |
| O-Allyl-Propranolol | 18,54 | 18,98 | 1,04 | 1,33 | 48899 | 55906 | - |
| 4-Hydroxy-Propranolol | 40,21 | 41,15 | 1,03 | 1,26 | 44240 | 51540 | (S) |
| Metoprolol | 26,17 | 25,47 | 1,02 | 0,63 | 41944 | 45582 | - |
| tert-Butyl-Metoprolol | 22,29 | 22,94 | 1,04 | 1,21 | 31978 | 25712 | - |
| Ethoxymethylmetoprolol | 25,04 | 25,24 | 1,01 | 0,47 | 56982 | 50222 | - |
| Ethoxyethylmetoprolol | 24,19 | 24,40 | 1,01 | 0,5 | 56136 | 54812 | - |
| Benzetimid | 23,83 | 25,43 | 1,10 | 3,43 | 44234 | 45678 | (R) |
| Etidocain | 11,63 | 11,87 | 1,07 | 0,86 | 37017 | 21999 | - |
| Mefloquin (MQ) | 69,16 | 89,49 | 1,33 | 12,02 | 35279 | 35366 | - |
| O-(tert-Butylcarbamoyl)-MQ | 33,45 | 48,98 | 1,62 | 29,99 | 36271 | 347589 | - |
| Pantoprazol | 10,87 | 11,34 | 1,16 | 1,77 | 27833 | 27272 | - |
| Omeprazol | 13,29 | 14,29 | 1,20 | 2,51 | 22914 | 16727 | - |
| N-Deisopropyldisopyramid | 20,45 | 21,05 | 1,05 | 1,23 | 23600 | 38233 | - |
| Disopyramid | 9,30 | 9,46 | 1,14 | 0,51 | 8199 | 30576 | - |
| Phenmetrazin | 41,10 | 43,44 | 1,07 | 2,59 | 39513 | 31802 | - |
| Sulpirid | 15,71 | 16,14 | 1,05 | 0,96 | 15706 | 28631 | - |
| 1-(2,4- Dichlorphenyl)2-(1-imidazolyl)ethanol | 14,66 | 15,12 | 1,07 | 0,84 | 6212 | 28440 | - |
| Tryptophanamid | 49,54 | 51,94 | 1,06 | 0,71 | 3247 | 4054 | - |
| Tramadol | 10,82 | 11,14 | 1,11 | 1,03 | 15394 | 26872 | - |
| Metanephrin | 31,34 | 32,01 | 1,03 | 1,18 | 48333 | 52128 | - |
| 1-(1-Naphtyl)ethylamin | 41,10 | 42,93 | 1,06 | 2,56 | 29837 | 140023 | - |
| Pronethalol | 31,83 | 34,91 | 1,13 | 5,4 | 53692 | 56179 | - |
| Butizid | 10,71 | 10,88 | 1,06 | 0,65 | 28546 | 26692 | - |
| Isoxsuprin | 24,93 | 27,90 | 1,18 | 5,91 | 41895 | 46861 | (+) |
| Miconazol | 12,03 | 12,35 | 1,07 | 0,77 | 14667 | 13197 | - |
| Dipivefrin | 25,99 | 26,92 | 1,05 | 1,98 | 49295 | 52467 | - |
| Terfenadin | 26,47 | 26,82 | 1,02 | 0,64 | 34893 | 40932 | - |
| Eprazinon | 10,28 | 10,57 | 1,10 | 1,15 | 25619 | 27507 | - |
| Salbutamol | 42,27 | 47,28 | 1,14 | 6,82 | 94682 | 42474 | - |
| Orciprenalin | 52,42 | 54,27 | 1,04 | 1,71 | 10462 | 37463 | - |
| Terbutalin | 52,77 | 57,79 | 1,11 | 6,2 | 80914 | 70211 | - |
| Clenbuterol | 36,43 | 45,92 | 1,33 | 14,18 | 58876 | 62213 | - |
| Mebeverin | 11,38 | 11,78 | 1,13 | 0,97 | 9955 | 15880 | - |
| Hydroxyzin | 15,35 | 15,55 | 1,03 | 0,58 | 25654 | 35311 | - |
| Flecainid | 18,44 | 18,93 | 1,05 | 1,39 | 43394 | 45500 | - |
| Flupentixol | 25,52 | 28,30 | 1,15 | 5,77 | 50729 | 49296 | - |
| Rimiterol | 55,13 | 59,77 | 1,10 | 2,77 | 19330 | 18537 | - |
| Oxyphencyclimin | 10,19 | 10,36 | 1,08 | 0,57 | 12765 | 28711 | - |

| | | | | | | | |
|---|---|---|---|---|---|---|---|
| ^{a} stereochemischer Deskriptor (absolute Konfiguration, optische Drehung) des ersten eluierten Enantiomers | | | | | | | |

Die Ergebnisse von Tabelle 4 liefern einen starken Beweis für das extrem breite Anwendbarkeitsspektrum der enantioselektiven starken Kationenaustauscher der vorliegenden Erfindung. Das erfundene Trennprinzip stellt somit ein Werkzeug dar, das als allgemein anwendbar auf die Enantiomertrennung von chiralen basischen Verbindungen angesehen werden kann, und - wie durch das Beispiel von Tryptophanamid illustriert - auch auf Aminosäuren und Peptide.

### Beispiel 5: Vergleich des chromatographischen Verhaltens von auf β-Aminocarbon-, Phosphon- und Sulfonsäuren basierenden, schwachen und starken chiralen Kationenaustauschern

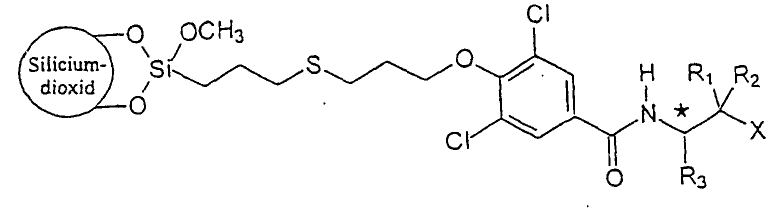

**CSP 3:** X = COOH, R₁ = R₂ = H, R₃ = *tert*-Butyl, (S)-Konfiguration
**CSP 4:** X = SO₃H, R₁ = R₂ = H, R₃ = *tert*-Butyl, (S)-Konfiguration
**CSP 5:** X = SO₃H, R₁ = R₂ = H, R₃ = COOH, (R)-Konfiguration
**CSP 6:** X = SO₃H, R₁ = R₂ = CH₃, R₃ = COOH
**CSP 7:** X = PO₃H₂, R₁ = R₂ = H, R₃ = *tert*-Butyl
* bezeichnet ein stereogenes Zentrum, das entweder R oder S ist

**Tabelle 5:**

| NA-CEC-Enantiotrennungen verschiedener basischer Verbindungen.^{a} | | | | | | |
|---|---|---|---|---|---|---|
| **Analyten** | **CSP 3 α** | **R**_{**s**} | **CSP 4 α** | **R**_{**s**} | **CSP5 α** | **R**_{**s**} |
| Mefloquin (MQ) | 1,10 | 4,87 | 1,29 | 12,02 | | |
| MQ-*tert*-Butylcarbamat | 1,13 | 4,25 | 1,46 | 29,99 | | |
| Ephedrin | 1,00 | 0,00 | 1,07 | 3,64 | 1,01 | 0,20 |
| Sotalol | 1,00 | 0,00 | 1,04 | 2,59 | 1,01 | 0,60 |
| Propafenon | 1,00 | 0,00 | 1,04 | 2,05 | 1,00 | 0,00 |
| Rimiterol | 1,00 | 0,00 | 1,08 | 2,77 | 1,01 | 0,32 |
| Bunitrolol | 1,00 | 0,00 | 1,05 | 2,67 | 1,00 | 0,00 |
| Benzetimid | 1,02 | 0,64 | 1,07 | 3,43 | 1,00 | 0,00 |
| Clenbuterol | 1,03 | 1,34 | 1,26 | 14,18 | 1,03 | 1,82 |
| Nifenalol | 1,05 | 2,40 | 1,18 | 8,37 | 1,02 | 0,95 |

| | | | | | | |
|---|---|---|---|---|---|---|
| ^{a} Säulenabmessung: 250 x 0,1 mm I.D. (L_{eff} = 250 mm, Lₜₒₜ = 335 mm), Eluent: 50 mmol/L Ameisensäure und 25 mmol/L 2-Aminobutanol in Acetonitril - Methanol (80:20, Vol.%); Spannung: + 15 kV; Temperatur: 20°C | | | | | | |

Der direkte Vergleich von Carbon- (CSP 3) und Sulfonsäuregegenstücken (CSP 4) (Tabelle 5) zeigt klar die beträchtlich gesteigerte Fähigkeit zur Enantiotrennung des stärkeren Kationenaustauschers, wie durch die Auflösungswerte (Rₛ), die in allen Testproben für CSP 4 höher sind, angezeigt.

### Beispiel 6: Synthese eines peptidabgeleiteten Selektors bzw. CSP

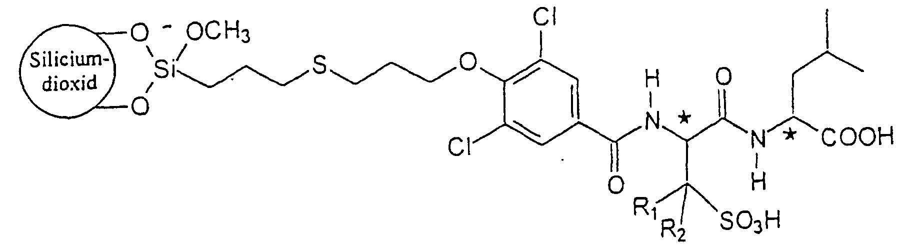

### (a) Oxidation von (Cys-Leu)₂ an das entsprechende Sulfonsäuredipeptid

Eine Perameisensäurelösung wird frisch zubereitet, indem bei Raumtemperatur 0,5 ml H₂O₂ (30% in Wasser) mit 9,5 ml Ameisensäure 2 Stunden lang vermischt wird. Das oxidierte dimere (Cys-Leu)₂-Dipeptid wird in Ameisensäure-Methanol (5:1, Vol.%) aufgelöst (40 mg/ml). Die 2 Lösungen werden auf 0°C abgekühlt, und danach wird die Peptidlösung tropfenweise der Perameisensäure beigegeben. Die Lösung wird danach 2,5 Stunden lang bei 0°C gerührt. Um die Reaktion zu stoppen, wird der Reaktionsmischung Eis beigefügt. Danach wird das Lösungsmittel durch Abdampfung entfernt.

### (b) Acylierung mit 4-Allyloxy-3,5-dichlorbenzoesäurehydroxysuccinimidester

Die 0,5 mmol des Sulfonsäuredipeptids wurden unter kräftigem Rühren in 25 ml Wasser aufgelöst. 7 mmol in 10 ml Wasser aufgelöstes NaHCO₃ und 0,7 mmol 4-Allyloxy-3,5-dichlorbenzoesäurehydroxysuccinimidester wurden sukzessive beigegeben. Die Reaktionsmischung wurde 16 Stunden lang bei Raumtemperatur kräftig gerührt. Nach Abdampfung des Lösungsmittels wurde das Produkt mittels präparativer Chromatographie auf einer auf *tert*-Butylcarbamoylchinidin basierenden, chiralen stationären Phase (dₚ = 15 µm; Säulenabmessung: 250 x 16 mm ID; Eluent: Methanol - 1,5 M Ammoniumacetat (80:20, Vol.%) (pHₐ = 6,0); Durchflussgeschwindigkeit: 6 ml/min, Raumtemperatur) aus der rohen Reaktionsmischung isoliert. Die Reinfraktion des chromatographischen Durchlaufs, die das Produkt enthielt, wurde bis zur Trockenheit abgedampft, in Wasser aufgelöst und auf einem Kationenaustauscher entsalzt (Dowex 50W, Wasser als Eluent). Das Eluat wurde bis zur Trockenheit abgedampft, wodurch sich das reine N-(4-Allyloxy-3,5-dichlorbenzoyl)-CySO₃H-Leu-Dipeptidprodukt ergab.

### (b) Immobilisierung von SO auf thiolmodifiziertem Kromasil 100-3,5 µm: siehe Beispiel 4b.

### Beispiel 7: Bestimmung von pKₐ-Werten (bezogen auf wässrige Bedingungen, pK_{a aq})

### (a) unter wässrigen Bedingungen

1 mmol Säure wird in 100 ml Wasser aufgelöst und durch potentiometrische Titration mit 0,1 mol/l NaOH-Lösung titriert. Der pK wird bestimmt, indem die Titrationskurve an die experimentellen Daten angepasst wird, wodurch sich der pK für die Kurve mit der besten Anpassung ergibt.

### (b) unter gemischt wässrig-organischen Bedingungen

pKₐ-Werte von Selektoren, die unter rein wässrigen Bedingungen nicht löslich sind, wurden bei 24°C mit einem Sirius-Titrator von Sirius Analytical Instruments Ltd (East Sussex, UK) in verschiedenen Methanol-Wasser-Verhältnissen titriert. Die pKₐ-Werte, die mit den Werten aus Beispiel 7a vergleichbar sind, wurden danach unter Anwendung des Yasuda-Shedlovsky-Vorgangs durch Rückextrapolation auf null Prozent organisches Hilfslösungsmittel erhalten.

### Beispiel 8: Synthese von chiralen organischen Kationenaustauschpolymerperlen

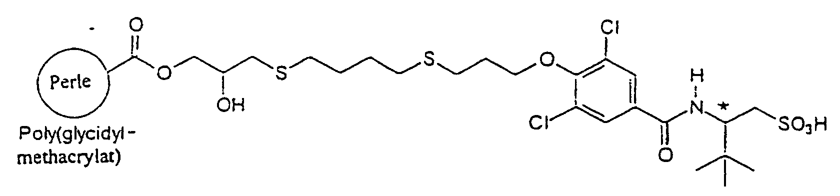

### (a) Thiolmodifizierte Polymethacrylatperlen

10 g Poly(glycidylmethacrylat-co-ethylendimethacrylat)polymerperlen (Suprema 1000u) wurden in 100 ml Methanol suspendiert und 10 Minuten lang ultrabeschallt, um alle Aggregate zu zerbrechen und eine homogene Aufschlämmung zu erhalten. Die Aufschlämmung wurde in einen mit einem mechanischen Rührer ausgestatteten Kolben übertragen. 80 mmol (= 9,4 ml) 1,4-Butandithiol und 80 mmol (= 4,48 g) Kaliumhydroxid, das in 30 ml Methanol aufgelöst war, wurden beigegeben. Die Reaktionsmischung wurde unter einer Stickstoffatmosphäre 72 Stunden lang bei Raumtemperatur gerührt. Danach wurden die Polymerpartikel filtriert, mit Methanol, THF, Chloroform und Diethylether (jeweils zweimal) gründlich gewaschen und getrocknet. Eine Elementaranalyse erbrachte 8,0% (Gew.%) S, was einer Belegung von 1,25 mmol Thiol/g Polymer entspricht.

### (b) Immobilisierung von (R)-N-(4-Allyloxy-3,5-dichlorbenzoyl)-2-amino-3,3-dimethylbutansulfonsäure auf thiolmodifizierten organischen Polymerperlen

0,5 g thiolmodifizierte Polymerpartikel wurden in 25 ml einer Wasser-Methanol-Mischung (80:20, Vol.%) suspendiert, 10 Minuten lang ultrabeschallt und in einen mit einem mechanischen Rührer und einem Kondensatkühler ausgestatteten Kolben übertragen. 300 mg (R)-N-(4-Allyloxy-3,5-dichlorbenzoyl)-2-amino-3,3-dimethylbutansulfonsäure und 30 mg 2,2'-Azobis(2-amidinopropan)dihydrochlorid als Initiator wurden hinzugefügt. Die Reaktionsmischung wurde unter einer Stickstoffatmosphäre 18 Stunden lang refluxiert. Die Partikel wurden gründlich mit Wasser-Methanol, Methanol, Chloroform, Diethylether gewaschen und getrocknet. Eine Elementaranalyse erbrachte eine Selektorbelegung von 102 µmol/g Polymer.

## Patentansprüche

1. Enantioselektives Kationenaustauschmaterial, umfassend einen chiralen Selektor (1), der aus einer chiralen Komponente (2) und zumindest einer Kationenaustauschgruppe (X) zusammengesetzt ist, einen Spacer (3) und einen Träger (4),
**dadurch gekennzeichnet, dass**
die chirale Komponente (2) ein Molekulargewicht von weniger als 1.000 hat und eine π-π-Wechselwirkungsstelle umfasst, und die zumindest eine Kationenaustauschgruppe (X) eine Säuregruppe mit einem pKa<4,0 ist.

2. Enantioselektives Kationenaustauschmaterial nach Anspruch 1, **dadurch gekennzeichnet, dass** die Säuregruppe einen pKa<3,5 hat.

3. Enantioselektives Kationenaustauschmaterial nach Anspruch 2, **dadurch gekennzeichnet, dass** die Säuregruppe einen pKa<2,5 hat.

4. Enantioselektives Kationenaustauschmaterial nach einem der Ansprüche 1-3, **dadurch gekennzeichnet, dass** die Säuregruppe eine Sulfon-, Sulfin-, Phosphor-, Phosphon- oder Phosphingruppe ist.

## Claims

1. An enantioselective cation-exchange material, comprising a chiral selector (1), composed of a chiral component (2) and at least one cation-exchange group (X), a spacer (3) and a carrier (4),
**characterized in that**
the chiral component (2) has a molecular weight of less than 1,000 and comprises a π-π interaction site and that the at least one cation-exchange group (X) is an acid group having a pKa<4.0.

2. An enantioselective cation-exchange material according to claim 1, **characterized in that** the acid group has a pKa<3.5.

3. An enantioselective cation-exchange material according to claim 2, **characterized in that** the acid group has a pKa<2.5.

4. An enantioselective cation-exchange material according to any of claims 1-3, **characterized in that** the acid group is a sulfonic, sulfinic, phosphoric, phosphonic or phosphinic group.

## Revendications

1. Matière échangeuse de cations énantiosélective, comprenant un sélecteur chiral (1), qui est composé d'un composant chiral (2) et d'au moins un groupe échangeur de cations (X), un espaceur (3) et un support (4),
**caractérisée en ce que**
le composant chiral (2) a un poids moléculaire de moins de 1000 et comprend un site d'interaction π-π et le au moins un groupe échangeur de cations (X) est un groupe acide avec un pKa < 4,0.

2. Matière échangeuse de cations énantiosélective selon la revendication 1, **caractérisée en ce que** le groupe acide a un pKa < 3,5.

3. Matière échangeuse de cations énantiosélective selon la revendication 2, **caractérisée en ce que** le groupe acide a un pKa < 2,5.

4. Matière échangeuse de cations énantiosélective selon l'une des revendications 1 à 3, **caractérisée en ce que** le groupe acide est un groupe sulfonique, sulfinique, phosphorique, phosphonique ou phosphinique.
